# EUROPEAN PATENT SPECIFICATION

(11) **EP 3 021 411 B1**
(45) Date of publication and mention of the grant of the patent: **04.10.2017**
(21) Application number: 15191656.6
(22) Date of filing: 27.10.2015
(51) Int. Cl.: H01M 8/1213, H01M 8/1246, H01M 4/86, H01M 4/88, H01M 4/90, H01M 8/1004, H01M 8/0202, H01M 8/124

(54) **INDIVIDUAL SOLID OXIDE FUEL CELL AND MANUFACTURING METHOD AND MANUFACTURING APPARATUS FOR SAME**
EINZELNE FESTOXIDBRENNSTOFFZELLE UND HERSTELLUNGSVERFAHREN UND HERSTELLUNGSVORRICHTUNG DAFÜR
PILE À COMBUSTIBLE À OXYDE SOLIDE INDIVIDUELLE ET PROCÉDÉ ET APPAREIL DE FABRICATION ASSOCIÉS

(30) Priority: 12.11.2014 JP 2014229704
(43) Date of publication of application: 18.05.2016
(73) Proprietor: Toto Ltd., Fukuoka 802-8601 (JP)
(72) Inventor: FURUYA, Seiki, Kitakyushu-shi,, Fukuoka 8028601 (JP); ANDO, Shigeru, Kitakyushu-shi,, Fukuoka 8028601 (JP); MOMIYAMA, Yutaka, Kitakyushu-shi,, Fukuoka 8028601 (JP); HAYAMA, Kiyoshi, Kitakyushu-shi,, Fukuoka 8028601 (JP); OKAMOTO, Osamu, Kitakyushu-shi,, Fukuoka 8028601 (JP); WATANABE, Naoki, Kitakyushu-shi,, Fukuoka 8028601 (JP); ISAKA, Nobuo, Kitakyushu-shi,, Fukuoka 8028601 (JP); SATO, Masaki, Kitakyushu-shi,, Fukuoka 8028601 (JP); KAKINUMA, Yasuo, Kitakyushu-shi,, Fukuoka 8028601 (JP); TANAKA, Shuhei, Kitakyushu-shi,, Fukuoka 8028601 (JP); MURAKAMI, Hironobu, Kitakyushu-shi,, Fukuoka 8028601 (JP); HOSHIKO, Takuya, Kitakyushu-shi,, Fukuoka 8028601 (JP)
(74) Representative: Witte, Weller & Partner Patentanwälte mbB

(56) References cited:
- FR-A1- 2 907 471
- JP-A- 2004 063 227
- JP-A- 2013 175 305
- HAMEDANI H A ET AL: "Fabrication of gradient porous LSM cathode by optimizing deposition parameters in ultrasonic spray pyrolysis", MATERIALS SCIENCE AND ENGINEERING B, ELSEVIER SEQUOIA, LAUSANNE, CH, vol. 153, no. 1-3, 25 September 2008 (2008-09-25), pages 1-9, XP025693684, ISSN: 0921-5107, DOI: 10.1016/J.MSEB.2008.07.006 [retrieved on 2008-09-25]

## Description

### Technical Field

0001 The present invention pertains to solid oxide fuel cells, and more particularly to a solid oxide fuel cell and manufacturing method and manufacturing apparatus for same in which multiple generating elements are formed on a porous support body and said generating elements are connected by an interconnector.

### Background Art

0002 Solid oxide fuel cells (also referred to as "SOFCs" below) are fuel cells which operate at a relatively high temperature in which, using an oxide ion-conducting solid electrolyte as electrolyte, with electrodes attached to both sides thereof, fuel gas is supplied to one side thereof and oxidizer gas (air, oxygen, or the like) is supplied to the other side thereof.

0003 Japanese Published Unexamined Patent Application 2013-175305 (Patent Document 1) sets forth a method for manufacturing a solid oxide fuel cell. In the solid oxide fuel cell set forth in this reference, multiple electricity generating elements comprising a fuel electrode, a solid electrolyte film, and an air electrode are formed on a base tube, and these electricity generating elements are electrically connected by interconnectors. In this method for manufacturing a fuel cell, a fuel electrode is formed by a screen printing method, then a solid electrolyte film and an interconnector are formed by a screen printing method, on a base tube. A base tube on which each of such layers is formed is then co-sintered in atmosphere, following which an air electrode is formed on the sintered solid electrolyte film using a dispenser. I.e., a screen slurry, in which a powder of the material forming the air electrode is suspended, is sprayed onto the solid electrolyte film and the interconnector so that a film of slurry for the air electrode is deposited at the position where the air electrode is to be formed. Finally, the base tube on which the air electrode is formed is then sintered in atmosphere.

### Prior Art References

0004

### Patent Documents

### Patent Document 1

Japanese Published Unexamined Patent Application 2013-175305

### Summary of the Invention

### Problems to be Solved by the Present Invention

0005 There is a problem, however, in that in solid oxide fuel cells in which a fuel electrode, a solid electrolyte film, and an air electrode are laminated onto a support body (base tube), cracking can occur in any of the layers if the thermal expansion characteristics of the layers differ when the assembly is heated and sintered, thereby causing an electrode to peel off. In particular, the risk of peeling increases when a large stress acts on the layer formed at the outermost layer of the support body. If, to avoid this problem, the materials of each layer are selected to have matching thermal expansion characteristics, then the range of selectable materials is narrowed so that a solid oxide fuel cell with sufficient electrical generating performance cannot be configured. Also, if the outermost layer is made thin in order to reduce the effect of stress caused by thermal expansion, the strength of the electrode itself will be diminished, with the risk that fuel cell durability will decline.

0006 Therefore the present invention has the object of providing a solid oxide fuel cell, and a method and apparatus for manufacturing same, with which durability can be improved while sufficient electrical generating performance is obtained.

### Means for Resolving Problems

0007 In order to resolve the above-described problems, the present invention is a method for manufacturing a solid oxide fuel cell in which multiple electricity generating elements, including functional layers of a fuel electrode layer, an electrolyte layer, and an air electrode layer are formed on a porous support body, and the electricity generating elements are connected using an interconnector, the method comprising steps of: a support body forming step for forming the porous support body; a film deposition step for forming, in sequence, a fuel electrode layer and an electrolyte layer on the porous support body; an air electrode layer deposition step for forming an air electrode layer on the two functional layers formed in the film deposition step, in which dots of slurry are formed by continuously jetting liquid droplets of the slurry for making the air electrode layer, and the aire electrode layer is formed by the agglomeration of the dots and is thicker than the first functional layer; and a sintering step for heating and sintering the functional layers; wherein in the aire electrode layer formed by the air electrode layer deposition step, traces of the agglomerated dots are left, and ring-shaped cracks are formed around each of the dot traces by the sintering step.

0008 In the invention thus constituted, the fuel electrocle layer and the electrolyte layer of the functional layers are formed in sequence by a film deposition step, on a porous support body formed by the support body forming step. Next, in the air electrode layer deposition step, liquid droplets of slurry are continuously jetted onto the two formed functional layers to form slurry dots, and an air electrode layer thicker than the fuel electrode layer is formed by the agglomeration of these dots. In addition, the functional layers are heated and sintered in the sintering step.

0009 In the invention thus constituted, traces of agglomerated dots remain in the air electrode layer formed by the aire electrode layer deposition step, and ring-shaped cracks are formed on the perimeters of each dot by the sintering step, thereby improving durability of the individual fuel cell. I.e., the formation of fine ring-shaped cracks around each remaining dot suppresses the growth of large cracks, so that peeling of the air electrode layer can be prevented. This allows the prevention of peeling caused by differential thermal expansion characteristics between layers, even when the air electrode layer is formed to be thick. Also, the size of cracks occurring in the air electrode layer is determined by the size of the dots produced by the jetting of liquid droplets of slurry, therefore cracks which do occur can be controlled to an intended size, and peeling caused by crack growth can be prevented. Since the occurrence of peeling, etc. based on differential thermal expansion characteristics is thereby prevented, the degree of freedom to select materials for forming the air electrode layer is increased so that a solid oxide fuel cell with high electrical generating performance can be obtained.

0010 In the present invention, in the air electrode layer deposition step, each dot of the slurry is preferably formed so that a portion thereof overlaps. In the invention thus constituted, each of the slurry dots is formed so that a portion thereof overlaps, therefore peeling caused by cracking in the perimeter of the dot traces can be reliably prevented. I.e., because a portion of each dot overlaps, a portion of the perimeter of a given dot is covered by another dot, so that continuous cracking around the entire perimeter of a single dot can be prevented. Therefore the occurrence of cracks around the entire perimeter of each dot remaining in the air electrode layer, and the resulting falling off of dots, can be prevented.

0011 In the present invention the film deposition step for forming the fuel electrode layer is performed by surface depositing in which deposition of the fuel electrode layers of the multiple electricity generating elements is simultaneously performed by bringing the slurry for making the fuel electrode layer into contact with the porous support body.

0012 In the invention thus constituted, the fuel electrode, which is the first functional layer, is formed by a surface film deposition, therefore the fuel electrode can be efficiently formed, and the stress acting on the fuel electrode can be reduced. I.e., in contrast to the small surface area per unit time of the film which can be formed in dot film deposition by continuous jetting of slurry in droplets, surface film deposition enables the simultaneous formation of a fuel electrode layer with multiple generating elements, so a fuel electrode layer can be formed in a short time. Also, in layers formed by surface film deposition, the surface is more smoothly formed than with dot film deposition, therefore the concentration of stress in a portion of the fuel electrode layer caused by unevenness in the surface during reduction processing of the fuel electrode layer can be suppressed. On the other hand, no reduction processing of the air electrode layer, in which dot traces are left on the surface, is required for the outermost functional layer, which is the air electrode layer, so the occurrence of stress caused by reduction processing can be avoided.

0013 In the present invention, the air electrode layers formed in the air electrode layer deposition step are preferably formed by agglomerating the slurry dots in such a way that edge portions of the air electrode layers are made thin. In the invention thus constituted, peeling in the edge portion of the air electrode layer can be prevented. I.e., even when each of the slurry dots is formed so that a portion thereof overlaps, the edge portion of the air electrode layer has a part where portions of the perimeter of the dot traces are not covered by other dots. By forming the edge portion of the air electrode layer to be thin, peeling of the edge portion, where peeling is likely to occur, can be reliably prevented.

0014 In the present invention, the air electrode layer, being the outermost functional layer, has preferably a bottom air electrode layer and a top air electrode layer formed on the bottom air electrode layer; the bottom air electrode layer is formed of a material with a higher oxygen exchange performance than the top air electrode layer, and is formed to be smooth and to be thinner than the top air electrode layer, whereas the top air electrode layer is formed of a material with a higher electron conductivity than the bottom air electrode layer.

0015 Using the invention thus constituted, fuel cells with stable performance can be efficiently manufactured. I.e., forming a thin and smooth bottom air electrode of a material with a high ion exchange performance enables the oxygen ion exchange performance in each part of the generating element to be made uniform, so that concentration of electrical current in parts with high ion exchange performance can be prevented. Also, forming a thick top air electrode layer of a material with a high electron conductivity (electrical conductivity) enables the electrical resistance of the top air electrode layer to be reduced, so that generated charges can be transferred with low loss.

0016 In the present invention the air electrode layer is preferably made of LSCF. In the invention thus constituted, the air electrode layer is made of LSCF, therefore solid oxide fuel cells with high electrical generation performance can be manufactured. I.e., LSCF has a high oxygen ion exchange performance and is desirable as an air electrode layer material, but presents the problem that it can easily peel due to its differential thermal expansion characteristics relative to other functional layer materials. For this reason, air electrode layers made of LSCF have to be thinly formed in order to reduce the effect of stress acting on the air electrode layer. In the present invention the effect of stress can be alleviated by forming ring-shaped cracks in the perimeter edge of dot traces in the air electrode layer, thereby enabling the formation of a thick LSCF air electrode layer in which the air electrode layer itself has a high strength.

0017 In the present invention each of the slurry dots agglomerated in the air electrode layer deposition step is preferably elliptical in shape. In the invention thus constituted, each slurry dot is elliptical, therefore the overlap can be made large when dots are being agglomerated, thereby increasing the peeling suppression effect.

0018 In the present invention length of the long axis of the elliptical dots is preferably 100 µm to 500 µm.

In the invention thus constituted, the effect of thermal expansion can be sufficiently absorbed and peeling prevented, and the time required to deposit the air electrode layer can be reduced.

0019 In addition, the present invention discloses a manufacturing system for performing the method of manufacturing a solid oxide fuel cell according to the present invention, comprising: a dot deposition apparatus for forming the functional layer by turning slurry for making the functional layer into liquid droplets and continuously spraying the liquid droplets; and a heating oven for heating the porous support body on which the functional layers are formed and sintering each layer.

In addition, the present invention is the solid oxide fuel cell manufactured by the solid oxide fuel cell manufacturing method of the present invention.

### Effect of the Invention

0020 Using the solid oxide fuel cell and manufacturing method and manufacturing apparatus for same of the present invention, sufficient electrical generating performance can be obtained and durability improved.

### Brief Description of Figures

0021
Fig. 1
   An overview configuration diagram showing a solid oxide fuel cell system containing individual solid oxide fuel cells according to a first embodiment of the invention.
Fig. 2
   A cross-section of an individual solid oxide fuel cell housing container according to a first embodiment of the invention.
Fig. 3
   A perspective view showing the entirety of an individual solid oxide fuel cell according to a first embodiment of the invention.
Fig. 4
   A cross-section showing an expanded view of a functional layer formed on the surface of a porous support body in an individual solid oxide fuel cell according to a first embodiment of the invention.
Fig. 5
   A summary front elevation showing the entirety of a dot deposition apparatus, being an individual fuel cell manufacturing apparatus according to a first embodiment of the invention.
Fig. 6
   A summary cross-section showing the tip portion of a jet dispenser provided on the dot deposition apparatus.
Fig. 7
   A summary front elevation showing the entirety of a surface deposition apparatus, being an individual fuel cell manufacturing apparatus according to a first embodiment of the invention.
Fig. 8
   A flow chart showing the surface deposition apparatus operating procedure.
Fig. 9
   A flowchart showing the procedure for a manufacturing method for individual fuel cells according to a first embodiment of the invention.
Fig. 10
   A schematic showing the procedure for laminating functional layers or the like on a porous support body in an individual fuel cell according to a first embodiment of the invention.
Fig. 11:
   A diagram showing the surface state of an air electrode layer after completion of a second sintering step.
Fig. 12:
   An electron micrograph of the parts of an individual fuel cell according to a first embodiment of the invention.
Fig. 13:
   A cross-section showing an expanded view of a functional layer formed on the surface of a porous support body in an individual fuel cell according to a second embodiment of the invention.

### Embodiments

0022 Next, referring to the attached drawings, we discuss a solid oxide fuel cell (SOFC) according to an embodiment of the present invention.

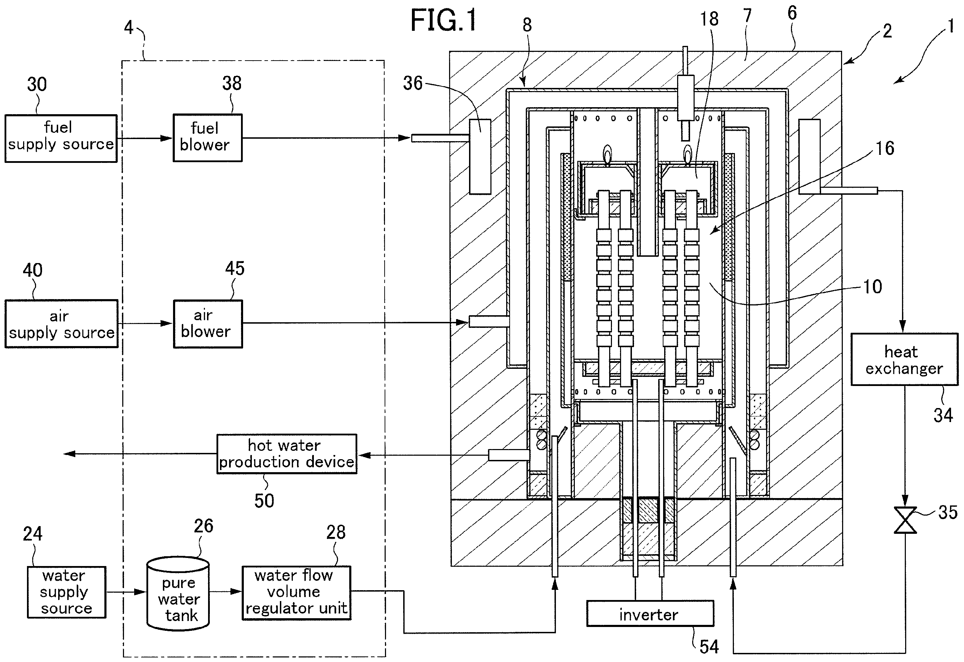

First, referring to Figs. 1 through 12, we explain an individual solid oxide fuel cell according to a first embodiment of the invention.

Fig. 1 is an overview configuration diagram showing a solid oxide fuel cell system containing individual solid oxide fuel cells according to a first embodiment of the invention. As shown by Fig. 1, the solid oxide fuel cell system 1 comprises a fuel cell module 2 and an auxiliary unit 4.

0023 The fuel cell module 2 is furnished with a housing 6, and a fuel cell holding vessel 8 is formed within this housing 6, mediated by the heat storage material 7. A generating chamber 10 is provided inside this fuel cell holding vessel 8; multiple individual fuel cells 16 (individual solid oxide cells) are concentrically disposed within this generating chamber 10, and an electricity generating reaction between fuel gas and air serving as oxidant gas is performed by these individual fuel cells 16.

0024 An exhaust collection chamber 18 is attached to the top end portion of each of the individual fuel cells 16. Residual fuel (off-gas) unused for the generating reaction and remaining in each fuel cell 16 is collected in the exhaust collection chamber 18 attached to the top end portion and flows out of the multiple jet openings placed in the ceiling surface of the exhaust collection chamber 18. Out-flowing fuel is combusted in the generating chamber 10 using remaining air not used for generation, producing exhaust gas.

0025 Next, an auxiliary unit 4 is furnished with a pure water tank 26 for holding water from a municipal or other water supply source 24 and filtering it into pure water, and a water flow volume regulator unit 28 (a "water pump" or the like driven by a motor) for regulating the flow volume of water supplied from this pure tank. Also, the auxiliary unit 4 comprises a fuel blower 38 (a motor-driven "fuel pump" or the like), being a fuel supply apparatus, for regulating the flow volume of hydrocarbon raw fuel gas supplied from the fuel supply source 30, such as municipal gas.

0026 Note that raw fuel gas which has passed through the fuel flow regulator unit 38 is directed into the fuel cell holding vessel 8 to a desulfurizer 32, a heat exchanger 34 and an electromagnetic valve 35 disposed within the fuel cell module 2. The desulfurizer 36 is disposed in a ring shape around the fuel cell housing container 8, and operates to remove sulfur from raw fuel gas. The heat exchanger 34 is provided to prevent the inflow of high temperature raw fuel gas, the temperature of which has risen in the desulfurizer 32, from flowing directly into and degrading the electromagnetic valve 35. The electromagnetic valve 35 is provided to stop the supply of raw fuel gas into the fuel cell housing container 8.

0027 The auxiliary unit 4 is furnished with an air flow regulator unit 45, which is an oxidant gas supply apparatus for regulating the flow volume of air supplied from the air supply source 40.

0028 Furthermore, the auxiliary unit 4 comprises a hot water production device 50 for recovering exhaust gas heat from the fuel cell module 2. Tap water is supplied to this hot water production device 50; this tap water is heated by exhaust gas and supplied to a hot water tank in an external hot water device, not shown.

Also, an inverter 54, which is an electrical power extracting portion (electrical power conversion portion) for supplying power generated by the fuel cell module 2 to the outside, is connected to the fuel cell module 2.

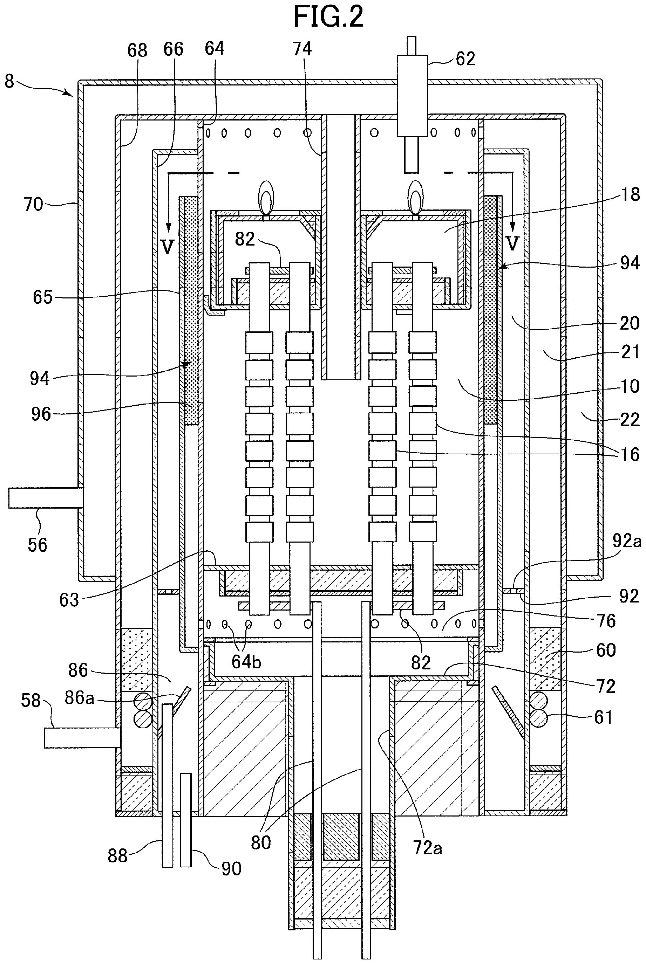

0029 Next, referring to Fig. 2, explain the internal structure of the fuel cell holding vessel 8 . Fig. 2 is a cross-section of a fuel cell holding vessel.

As shown in Fig. 2, multiple individual fuel cells 16 are concentrically disposed in the space inside the fuel cell holding vessel 8, and a fuel gas supply flow path 20 serving as fuel flow path, an exhaust gas discharge flow path 21, and an oxidant gas supply flow path 22 are concentrically formed in sequence so as to surround multiple individual fuel cells 16.

0030 First, as shown in Fig. 2, fuel cell holding vessel 8 is an approximately cylindrical sealed vessel; connected to its side surface are an oxidant gas introducing pipe 56, which is an oxidant gas inflow port for supplying generating air, and an exhaust gas exhaust pipe 58, which discharges exhaust gas. In addition, an ignition heater 62 for igniting residual fuel flowing out from the exhaust collection chamber 18 protrudes from the top end surface of the fuel cell housing container 8.

0031 As shown in Fig. 2, disposed within the fuel cell holding vessel 8 so as to surround the perimeter of the individual fuel cells 16, in sequence starting from the inside, are an inside cylindrical member 64, an outside cylinder member 66, an inside cylindrical container 68, and an outside cylindrical container 70. The above-described fuel gas supply flow path 20, exhaust gas discharge flow path 21, and oxidant gas supply fuel path 22 are flow paths respectively constituted between these cylinder members and cylinder containers, and heat is exchanged between adjacent flow paths. The open space at the bottom end of fuel cell housing container 8 is blocked off by an approximately circular dispersion chamber bottom member 72, which forms the bottom surface of the fuel gas dispersion chamber 76 for dispersing fuel into each fuel cell 16.

0032 A combustion catalyst 60 and a sheath heater 61 for heating it are disposed on the lower portion of the exhaust gas discharge flow path 21.

The combustion catalyst 60 is a catalyst filled into the ring-shaped space between the outside perimeter surface of the outside cylinder member 66 and the inside perimeter surface of the inside cylindrical container 68, above the exhaust gas discharge pipe 58. By passing through the combustion catalyst 60, carbon monoxide is removed from exhaust gas descending the exhaust gas discharge flow path 21 to be discharged from the exhaust gas exhaust pipe 58.

The sheath heater 61 is an electrical heater attached so as to surround the outer perimeter surface of the outside cylindrical member 66 at the bottom of the combustion catalyst 60. Upon startup of the solid oxide fuel cell system 1, the combustion catalyst 60 is heated to an activation temperature by powering the sheath heater 61.

0033 The space between the outer perimeter surface of the inside cylinder container 68 and the inner perimeter surface of the outside cylinder container 70 functions as an oxidant gas supply fuel path 22. The oxidant gas introducing pipe 56 is connected to the lower portion side surface of the outside cylinder container 70; the oxidant gas supply fuel path 22 communicates with the oxidant gas introducing pipe 56.

0034 A combustion gas dispersion chamber 76 is constituted between the first affixing member 63 and the dispersion chamber bottom member 72. Also, an insertion pipe 72a for the insertion of bus bars 80 (Fig. 2) is provided at the center of the dispersion chamber bottom member 72. The bus bars 80, electrically connected to each individual fuel cell 16, are routed out to the outside of the fuel cell housing container 8 through this insertion pipe 72a.

0035 An oxidant gas injecting pipe 74 for injecting generating air, circular in cross section, is attached so as to hang down from the ceiling surface of the inside cylinder container 68. This oxidant gas injecting pipe 74 then extends in the vertical direction on the center axial line of the inside cylindrical container 68, and each fuel cell 16 is disposed on concentric circles around it. Air supplied via the oxidant gas supply flow path 22 is injected downward from the tip of the oxidant gas injecting pipe 74, hitting the top surface of the first affixing member 63 and spreading to the entire interior of the generating chamber 10.

0036 The combustion gas dispersion chamber 76 is a cylindrical airtight chamber constituted between the first affixing member 63 and the dispersion chamber bottom member 72, on the top surface of which each of the fuel cells 16 are adjacently vertically arrayed. The inside fuel electrode of each individual fuel cell 16 attached to the top surface of the first affixing member 63 communicates with the interior of the fuel gas dispersion chamber 76. The bottom end portion of each individual fuel cell 16 penetrates an insertion hole in the first affixing member 63 and projects into the combustion gas dispersion chamber 76, and each individual fuel cell 16 is affixed to the first affixing member 63 by adhesion.

0037 As shown in Fig. 2, supplied fuel first rises through the space between the inside perimeter of the external cylindrical member 66 and the outside perimeter of the intermediate cylindrical member 65, then descends through the space between the outside perimeter of the inside cylindrical member 64 and the inside perimeter of the intermediate cylindrical member 65, flowing into the fuel gas dispersion chamber 76 through multiple small holes 64b. Fuel gas which has flowed into the fuel gas dispersion chamber 76 is distributed to each individual fuel cell 16 attached to the ceiling surface of the fuel gas dispersion chamber 76 (first affixing member 63).

0038 In addition, the bottom end portion of the individual fuel cells 16 projecting into the combustion gas dispersion chamber 76 is electrically connected to the bus bars 80 in the combustion gas dispersion chamber 76, and power is extracted to the outside through the electrical conductor conduit 72a. The bus bars 80 are electrically connected to a current collector 82 attached to each fuel cell 16 on the interior of the fuel gas dispersion chamber 76. The bus bars 80 are also connected on the outside of the fuel cell housing container 8 to an inverter 54 (Fig. 1). Note that the current collector 82 is also attached to the top end portions of each fuel cell 16 projecting into the exhaust collection chamber 18. The collection chamber lower member 18b is a circular plate-shaped member open at the top, at the center of which a cylindrical portion is erected to allow penetration of the oxidant gas injection pipe 74.

0039 Next we explain the constitution of the exhaust collection chamber 18. The exhaust collection chamber 18 is a chamber, donut-shaped in cross section, attached to the top end portion of the individual fuel cells 16; an oxidant gas injection pipe 74 penetrates and extends at the center of this exhaust collection chamber 18. Multiple circular penetration holes are placed on the bottom surface of the exhaust collection chamber 18. The top end portions of the individual fuel cells 16 respectively penetrate each of the insertion holes. On the other hand, multiple jet openings for jetting collected fuel gas are disposed on the ceiling surface of the exhaust collection chamber 18. Fuel remaining unused for electrical generation flows out from the top end of each fuel cell 16 into the exhaust collection chamber 18, and fuel collected inside the exhaust collection chamber 18 flows out from the jet ports 18d, where it is combusted.

0040 Next, referring to Fig. 2, we discuss the constitution for reforming raw fuel gas supplied from fuel supply source 30.

First, a vaporizing section 86 for vaporizing water for steam reforming is provided on the bottom portion of the fuel gas supply flow path 20. The vaporizing section 86 is formed by ring-shaped angled plates 86a attached to the bottom inside perimeter of the outside cylinder member 66, and by the water supply pipe 88. The angled plates 86a are thin metal plates formed in a ring shape, the outside perimeter edge of which is attached to the inside wall surface of the outside cylinder member 66. On the other hand the inside perimeter edge of the angled plates 86a is positioned above the outside perimeter edge, and a gap is provided between the inside perimeter edge of the angled plates 86a and the inside perimeter edge of the inside cylinder member 64.

0041 The fuel gas flow path 88 is a pipe extending from the bottom end of the inside cylindrical member 64 in the vertical direction inside the fuel gas supply flow path 20; water supplied to the top surface side of the angled plates 86a agglomerates on the top surface of the angled plates 86a and on inside wall surface of the outside cylindrical member 66. Water supplied to the top surface of the angled plates 86a is vaporized there to produce steam.

0042 Also, a fuel gas introducing portion for introducing fuel gas into the fuel gas supply flow path 20 is placed at the bottom of the vaporizing section 86. Raw fuel gas fed from a fuel blower 38 is introduced into fuel gas supply flow path 20 via a fuel gas supply pipe 90. Raw fuel gas fed from the fuel blower 38 is introduced at the bottom side of the angled plates 86a and rises to the top side of the angled plates 86a as its flow path is constricted by the slope thereof. Raw fuel gas rising to the top side of the angled plates 86a rises together with the steam produced by the vaporizing section 86.

0043 A fuel gas supply flow path partition 92 is provided at the top of the vaporizing section 86 inside the fuel gas supply flow path 20.

Multiple injection ports 92a are provided at equal spacing on the circumference of this fuel gas supply flow path partition 92. Raw fuel gas introduced from the fuel gas supply pipe 90 and steam produced by the vaporization section 86 are first pooled in the space on the bottom side of the fuel gas supply flow path partition 92, then passed through each of the injection ports 92a and injected into the space on the top side of the fuel gas supply flow path partition 92, where they are fully blended.

0044 In addition, the reforming section 94 is provided at the top portion of the annular space between the inner perimeter of the intermediate cylindrical member 65 and the outer perimeter of the inside cylindrical member 64. The reforming section 94 comprises a catalyst holding plate (not shown) attached to the outer wall surface of the inside cylindrical member 64, and a reforming catalyst 96 held by same. Thus the steam reforming reaction SR shown by Eq. (1) proceeds inside the reforming section 94 when raw fuel gas and steam, mixed in the space on the top side of the fuel gas supply flow path partition 92, make contact with the reforming catalyst 96 filled into the reforming section 94.

CₘHₙ + xH₂O→aCO₂+bCO+cH₂ (1)

0045 Fuel gas reformed in the reforming portion 94 flows downward in the space between the inner perimeter of the intermediate cylindrical member 65 and the outer perimeter of the inside cylindrical member 64, then flows into the combustion gas dispersion chamber 76 and is supplied to each fuel cell 16. The steam reforming reaction SR is an endothermic reaction, however the heat required for the reaction is supplied by the combustion heat of off-gas flowing out from the exhaust collection chamber 18 and the emitted heat generated in each fuel cell 16.

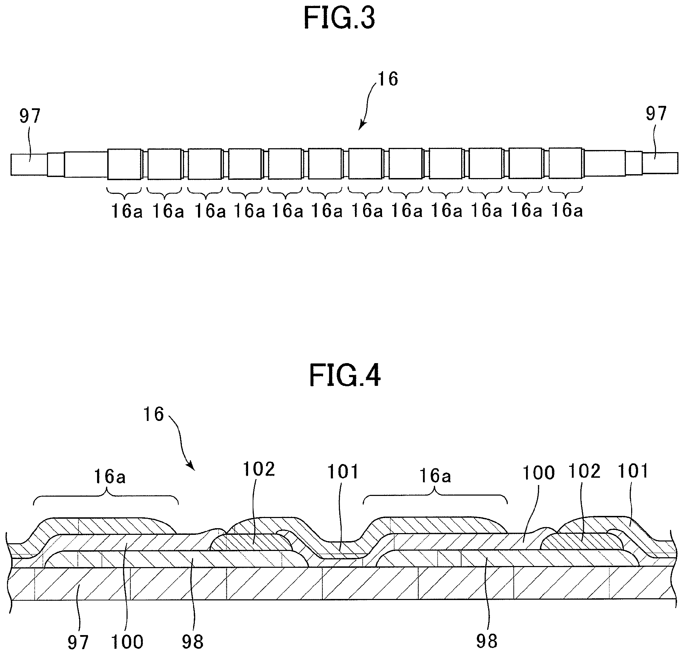

0046 Next, referring to Figs. 3 and 4, we explain the structure of an individual fuel cell according to a first embodiment of the invention.

Fig. 3 is a perspective view showing the entirety of the individual fuel cell; Fig. 4 is a cross-section showing an expanded view of a functional layer formed on the surface of a porous support body in an individual fuel cell.

As shown in Fig. 3, the individual fuel cells 16 (solid oxide fuel cells) of the present embodiment are cylindrical horizontal-band cells using a solid oxide. Multiple electricity generating elements 16a are formed in horizontal bands on each of the fuel cells 16, and a single individual fuel cell 16 is constituted by electrically connecting these in series. Each fuel cell 16 comprises an anode (positive electrode) at one end and a cathode (negative electrode) at the other end; of the multiple individual fuel cells 16, half are disposed so that the top end is an anode and the bottom end is a cathode, while the other half are disposed so that the top end is a cathode and the bottom end is an anode.

0047 As shown in Fig. 4, the individual fuel cells 16 of the present embodiment have a cylindrical porous support body 97 and three functional layers formed thereon, those being a fuel electrode layer 98, an electrolyte layer 100, and an air electrode layer 101. In the individual fuel cells 16, the fuel electrode layer 98, the electrolyte layer 100, and the air electrode layer 101 are sequentially formed on the porous support body 97, thereby forming the electricity generating elements 16a. In each of the electricity generating elements 16a, the fuel electrode layer 98 functions as an anode and the air electrode layer 101 functions as a cathode. Each of these electricity generating elements 16a is electrically connected in series by the interconnect layer 102. In the present embodiment, twelve electricity generating elements 16a are formed on a single individual fuel cell 16, and these are connected by the interconnect layer 102.

0048 Specifically, as shown in Fig. 4, one of the end portions of the fuel electrode layers 98 forming each of the electricity generating elements 16a and the end portion on the opposite side of the air electrode layer 101 are extended. The extended end portion of the fuel electrode layer 98, which is the positive pole of the electricity generating element 16a, is connected by the extended end portion of the air electrode layer 101, which is the negative pole of the adjacently disposed electricity generating element 16a, and by the interconnect layer 102.

0049 Next we explain the constitution of the porous support body 97 and each of the functional layers.

In the present embodiment the porous support body 97 is formed by extruding a cylindrical mixture using forsterite, an electrically insulating material, as its main component, with a binder added, then sintering this extrusion. The fuel electrode layer 98, in this embodiment, is an electrically conductive thin film comprising a blend of NiO powder and 10YSZ (10 mol% Y₂O₃ - 90 mol% ZrO₂) powder.

0050 In the embodiment, solid electrolyte layer 100 is a thin film comprising an LSGM powder composition of La_{0.9}Sr_{0.1}Ga_{0.8}Mg_{0.2}O₃. Electrical energy is produced by the reaction between oxide ions and hydrogen or carbon monoxide through this solid electrolyte layer 100.

0051 In the embodiment, air electrode 101 is an electrically conductive thin film comprising a powder composition of La_{0.6}Sr_{0.4}Co_{0.8}Fe_{0.2}O₃. In the present embodiment, the interconnect layer 102 is an electrically conductive thin film comprising SLT (lanthamum doped strontium titanate) and La₁₋ₓSrₓTi_{1-y-z}NbyFe_{z}O₃ (LSTNF, 0.1≤0.8, 0.05≤y≤0.2, 0.2≤z≤0.5).

0052 Next we explain an apparatus for manufacturing an individual fuel cell according to a first embodiment of the invention.

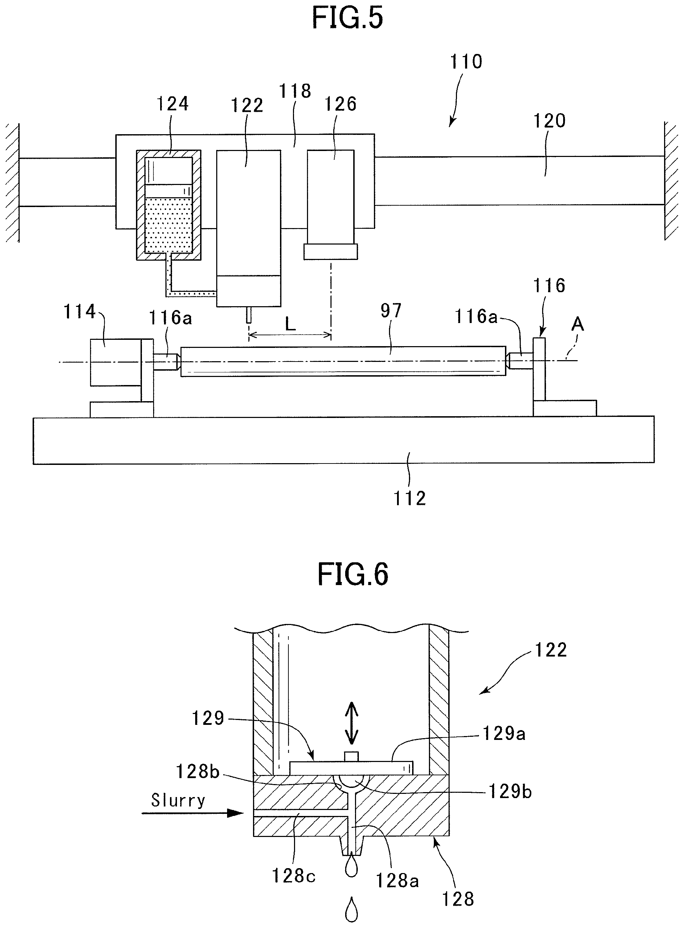

First, referring to Figs. 5 and 6, we explain a dot deposition apparatus used in a dot deposition step for forming functional layers, etc. Fig. 5 is a summary front elevation showing the entirety of a dot deposition apparatus; Fig. 6 is a summary cross-section showing the tip portion of a jet dispenser provided on the dot deposition apparatus.

0053 The above-described functional layers are formed by adhering onto the porous support body 97 a slurry in which the powder constituting each functional layer is suspended, then sintering.

In each of the individual fuel cell 16 manufacturing steps, the dot deposition apparatus 110 turns the slurry for respectively forming the interconnector and the air electrode layer into liquid droplets and selectively and continuously injects these drops onto the parts requiring the dot deposition. The dot deposition apparatus 110 also comprises a positioning function for forming the interconnector or the air electrode layer at predetermined positions.

0054 As shown in Fig. 5, the dot deposition apparatus 110 has a base 112, a motor 114 for rotating the porous support body 97 on which dots are to be film-deposited, an affixing jig 116 for holding the porous support body 97 so that it can be rotated, a head portion 118 for jetting liquid droplets, and a guide rail 120 for guiding this head portion 118.

0055 The motor 114 and affixing jig 116 are installed on the base 112.

The affixing jig 116 is constituted to hold the porous support body 97 on which dots are to be film-deposited in a rotatable manner. I.e., the affixing jig 116 holds the porous support body 97 horizontally so as to sandwich it from both ends by respectively inserting conical centering rods 116a into the two ends of the cylindrical porous support body 97. Each of the centering rods 116a is constituted to be rotatable about the center of a horizontal rotational center line A, by which means the porous support body 97 held thereby is held so as to be able to rotate about rotational center line A. The motor 114 is constituted to turn the porous support body 97, held by each of the centering rods 116a, about the rotational center line A.

0056 Here, by holding the cylindrical porous support body 97 by sandwiching it at both ends using the conical centering rods 116a, the porous support body 97 is held in such a way that its centerline matches the rotational center line A of the centering rods 116a. However, because the porous support body 97 is not a perfect cylinder due to manufacturing errors, in actuality the rotational center line A and the porous support body 97 center line are slightly offset.

0057 The head portion 118 has: a jet dispenser 122 for turning a slurry or the like into liquid droplets and jetting same, a slurry vessel 124 for supplying slurry or the like to this jet dispenser 122, and a camera 126 for capturing images of the porous support body 97 on which dots are to be film-deposited.

The fuel gas supply flow path 20 is constituted by moving the head portion 118 parallel to the rotational center line A. When depositing a dot film, the porous support body 97 is rotated as a liquid droplet slurry is jetted from the jet dispenser 122; by feeding the head portion 118 at a predetermined speed along the guide rail 120, a belt-shaped slurry film can be formed around the porous support body 97.

0058 The jet dispenser 122, as shown by Fig. 6, has a nozzle portion 128 for jetting slurry or the like, and a jet actuator 129 for controlling jetting.

A jet nozzle hole 128a directed in the vertical direction is disposed on the nozzle portion 128, and a indentation 128b, wider than the jet nozzle hole 128a, is formed at the end of this jet nozzle hole 128a. In addition, a horizontally oriented slurry supply pathway 128c, placed so as to communicate with the jet nozzle hole 128a, is formed on the nozzle portion 128. Slurry or the like to be jetted is injected from the slurry vessel 124 into the slurry supply pathway 128c. Slurry or the like supplied from the slurry supply pathway 128c flows into the jet nozzle hole 128a and is jetted from the tip (bottom end) of the jet nozzle hole 128a.

0059 The jet actuator 129 has a flexible plate 129a and a projecting portion 129b attached to this flexible plate 129a.

The flexible plate 129a is a flexible rubber plate, attached so as to cover the indentation 128b formed on the nozzle portion 128. The projecting portion 129b is a metal protrusion attached to the center portion of the flexible plate 129a, and is received in the indentation 128b on the nozzle portion 128. A pulsing air pressure acts on the rear surface side (the opposite side to the indentation 128b) of the flexible plate 129a; the flexible plate 129a bends due to fluctuations in this air pressure, so that the projecting portion 129b attached to the flexible plate 129a moves up and down.

0060 When the projecting portion 129b is moved downward, the volume inside the jet actuator 129 housing same is reduced, therefore the slurry or the like filled into the jet nozzle hole 128a and the indentation 128b is turned into liquid droplets and jetted out from the tip of this jet nozzle hole 128a. The pulsing at a predetermined cycle of this air pressure on the rear surface side of the flexible plate 129a causes the projecting portion 129b to move up and down, so that liquid droplet-form slurry or the like is continuously jetted at a predetermined cycle. Liquid droplets of jetted slurry form dots on the porous support body 97, and a slurry film is formed by the agglomeration of these dots.

0061 By feeding the jet dispenser 122 at a predetermined speed along the guide rail 120 while the porous support body 97 is rotated by the motor 114 drive, slurry dots can be made to agglomerate in a horizontal striped shaped at desired positions on the porous support body 97. Note that the thickness of the layer formed by dot film deposition can be controlled by the rotational speed of the motor 114, the feed speed of the jet dispenser 122, the size of the liquid droplets jetted from the jet dispenser 122, and the viscosity of the jetted slurry, etc.

0062 The camera 126 captures images of the fuel electrode layer and interconnector layer, etc. formed on the porous support body 97; the position of the boundary line between these can be identified through image analysis. Also, the horizontal distance L between the position on the image captured by the camera 126 and the jet nozzle hole 128a through which liquid droplets are jetted is pre-stored in memory (not shown). Therefore the jet nozzle hole 128a can be moved from the position identified on the captured image to another position identified on the image by transferring the head portion 118 by distance L along the guide rail 120.

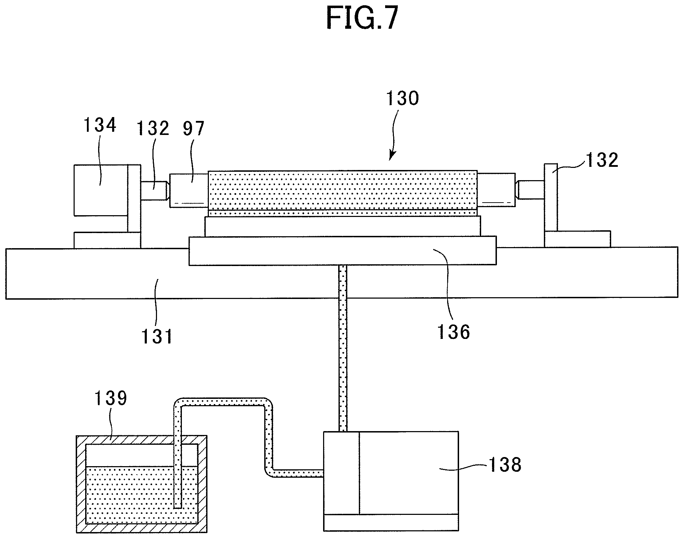

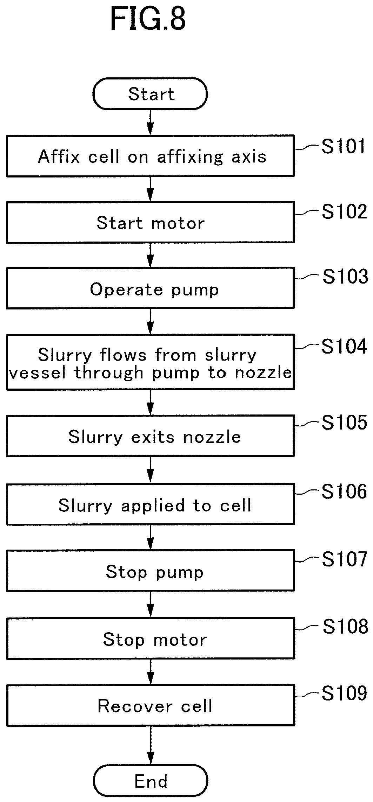

0063 Next, referring to Figs. 7 and 8, we explain the surface film deposition apparatus used in the surface deposition steps for forming a functional layer. Fig. 7 is a summary front elevation showing the entirety of the surface film deposition apparatus; Fig. 8 is a flow chart showing the surface film deposition apparatus operating procedure.

As shown in Fig. 7, the surface film deposition apparatus 130 has an base 131 and a affixing jig 132 disposed on this base 131, a motor 134 for rotating the affixing jig 132, a surface film deposition nozzle 136 for spraying slurry, a pump 138 for pressure feeding slurry to said surface film deposition nozzle 136, and a slurry vessel 139 for holding the slurry being supplied.

0064 The affixing jig 132 is disposed on the base 131. The affixing jig 132 orients the porous support body 97 in the horizontal direction, supporting both end portions thereof so that they are able to rotate. The motor 134 is linked to the affixing jig 132, and is constituted to rotate the affixing jig 132 and the porous support body 97 supported thereby through a predetermined number of revolutions around the center axis line of the porous support body 97.

0065 The surface film deposition nozzle 136 is disposed immediately below the porous support body 97, which is supported by the affixing jig 132, so that slurry is sprayed upward toward the porous support body 97.

The pump 138 is constituted to suction in slurry held in the slurry vessel 139 and spray out slurry from the surface film deposition nozzle 136 at a predetermined flow rate.

0066 A slit-shaped fine nozzle hole (not shown) is disposed on the surface film deposition nozzle 136, so that slurry is uniformly sprayed onto the entire region over which the surface film is to be deposited on the porous support body 97. Slurry sprayed from the surface film deposition nozzle 136 is immediately adhered to the horizontally-disposed porous support body 97, and each of the functional layers is simultaneously deposited on the multiple electricity generating elements 16a formed on the porous support body 97. Note that, as described below, masking has been previously applied by the dot film deposition apparatus 110 to parts on the porous support body 97 not requiring surface film deposition. Slurry not adhering to and remaining on the porous support body 97 flows down around the surface film deposition nozzle 136 and is recovered.

0067 Next, referring to Fig. 8, we explain the procedure for surface film deposition.

First, in step S101 in Fig. 8, the porous support body 97 on which a surface film is to be deposited is affixed to the affixing jig 132. Note that masking has already been applied to the parts on the porous support body 97 not requiring surface film deposition. Next, in step S102, the motor 134 is started and the porous support body 97 is rotated around the center axis line thereof through a predetermined number of rotations. Also, the pump 138 is operated in step S103. This results in uptake of slurry from the slurry vessel 139 and pressure feeding of slurry to the surface film deposition nozzle 136 (step S104). Pressure fed slurry is sprayed upward from the surface film deposition nozzle 136 (step S 105). Slurry sprayed from the surface film deposition nozzle 136 is coated onto the surface of the porous support body 97 rotating above the surface film deposition nozzle 136 (step S106).

0068 Slurry not adhering to the porous support body 97 and remaining flows down around the surface film deposition nozzle 136. Also, excess slurry adhering to the porous support body 97 flows down due to centrifugal force on the rotating porous support body 97, so that a slurry film of a predetermined thickness is deposited on the porous support body 97. Therefore the thickness of the layer formed on the porous support body 97 can be controlled by rpm of the porous support body 97, the spray flow volume from the surface film deposition nozzle 136, and the slurry viscosity, etc.

Next, the pump 138 is stopped in step S107, and the motor 134 is stopped in step S108. Furthermore, the porous support body 97 on which a film has been deposited is removed from the affixing jig 132 in step S109, and the surface deposition step is completed.

0069 The above-explained dot deposition apparatus 110, surface deposition apparatus 130, and heating oven for sintering the film-deposited functional layers constitute a solid oxide fuel cell manufacturing system.

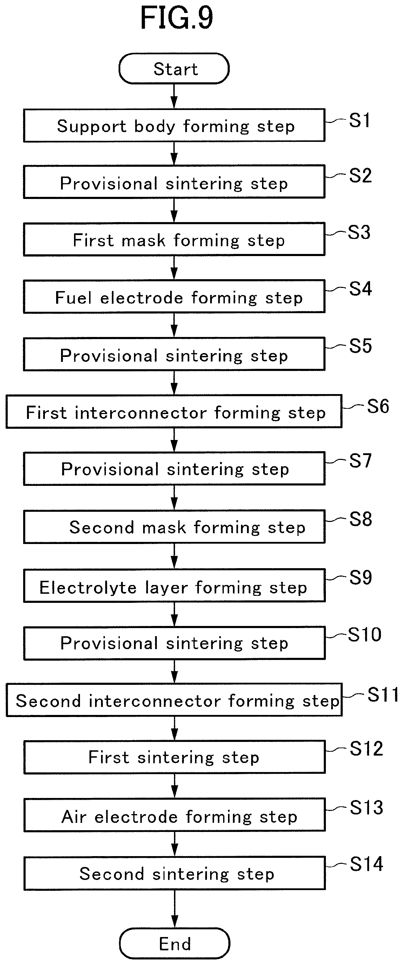

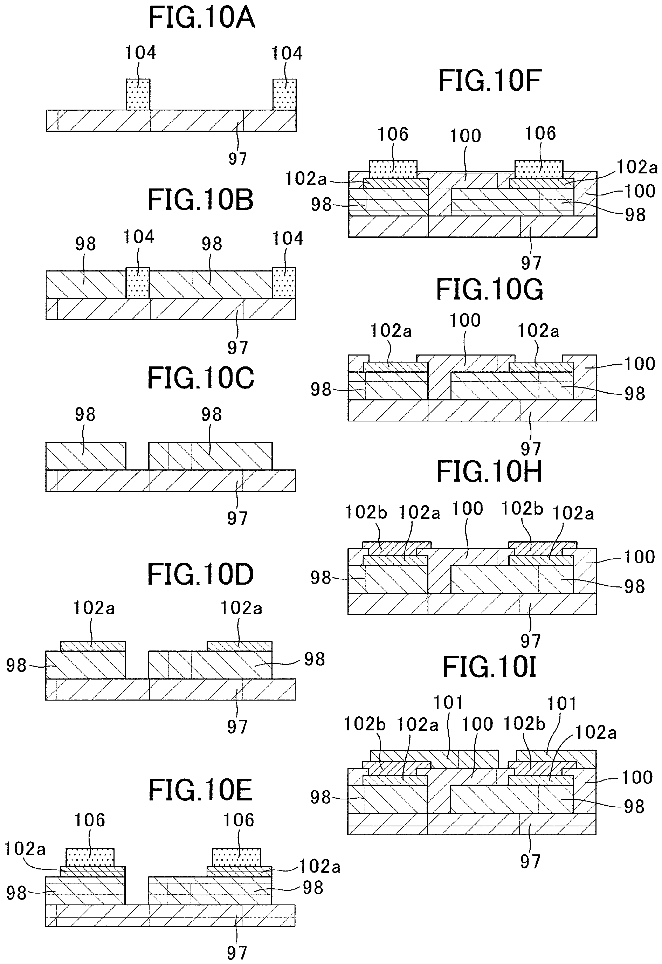

0070 Next, referring to Figs. 9 and 10, we explain a method for manufacturing an individual solid oxide fuel cell according to a first embodiment of the invention.

Fig. 9 is a flowchart showing the procedure of the manufacturing method of the present embodiment; Figs. 10A-10I are schematic showing the procedure for laminating functional layers or the like on a porous support body. Note that Figs. 10A-10I show the overlaying of each functional layer schematically, and does not specifically show the cross sectional shapes or dimensions of each layer.

0071 First, in step S1 of Fig. 9, a forsterite porous support body 97 is formed as a support body forming step. Specifically, a clay-like material made of forsterite powder with an added binder is extruded and molded into a cylinder shape by an extrusion molding machine (not shown).

Next, in step S2, as a provisional sintering step the porous support body 97 extruded in step S1 is heated and provisionally sintered in a heating oven (not shown). In the present embodiment, the porous support body 97 molded body is heated and provisionally sintered for approximately 2 hours to approximately 1000°C in a heating oven. This provisionally sintered forsterite porous support body 97 is an electrically insulating body, approximately white in color.

0072 Next, in step S3 as a first mask forming step, a mask forming agent is coated onto the porous support body 97 provisionally sintered in step S2, forming a masking layer 104. Specifically, in this first mask forming step, a masking layer 104 is dot film deposited using the dot deposition apparatus 110. I.e., in the first mask forming step, using the jet dispenser 122 (Fig. 5) of the dot deposition apparatus 110, a mask forming agent is continuously jetted in liquid droplet form onto the area where the masking layer 104 is to be formed, thereby forming dots of mask forming agent on the porous support body 97, and the masking layer 104 is dot film deposited by this agglomeration of dots. Therefore in the first mask forming step, the dot deposition apparatus 110 functions as a mask layer forming apparatus.

0073 As shown in Fig. 10A, the masking layer 104 is formed in the parts on the porous support body 97 not requiring deposition of a film to serve as a fuel electrode layer 98. When the viscosity of the mask forming agent is too low, it penetrates deeply into the interior of the porous support body 97, which is an ultra-porous body, thus requiring many iterations of film deposition to form a masking layer 104 of a predetermined film thickness, so that manufacturing efficiency drops. Also, penetration of the mask forming agent results in an imprecise area over which the masking layer 104 is formed. On the other hand, if the mask forming agent viscosity is too high, smoothness of the formed masking layer 104 surface will be insufficient. In this case, slurry pools on the masking layer 104 when a surface film is deposited in the next step, and this slurry remains in portions not requiring film deposition. In the present embodiment, the viscosity of the mask forming agent is appropriately adjusted.

0074 Also, the masking layer 104 is naturally dried after application of the mask forming agent. In the present embodiment, the Fluoro Surf^{(™)}FS-1000 series or Fg-3020 series by Fluoro Technology, Inc. is used as the mask forming agent.

0075 In this first mask forming step, positioning of the location at which the masking layer 104 is formed references an affixing jig 116 provided in the dot deposition apparatus 110. I.e., the dot deposition apparatus 110 moves the head portion 118 from a previously stored affixing jig 116 position, then starts the dot film deposition of the masking layer 104 from that position as it rotates the porous support body 97. The entire masking layer 104 formed in the first mask forming step is positioned using the amount by which the head portion 118 is fed based on the position of the affixing jig 116, and the width of the masking layer 104 is set by the distance moved by the head portion 118 from that position.

0076 Therefore the masking layer 104 formed in the first mask forming step is formed into a ring shape perpendicular to the rotational axis line A of the dot deposition apparatus 110. Hence when there is bending of the porous support body 97 due to manufacturing errors, etc., the masking layer 104 is not, precisely speaking, perpendicular to the center axis line of porous support body 97. However, this type of error is not a problem in the individual fuel cells 16, and by virtue of forming the masking layer 104 perpendicular to the rotational center line A of the dot deposition apparatus 110, there is no need to make a positioning correction in response to bending of the porous support body 97, etc., and film deposition can be easily performed. Also, using dot film deposition, the masking layer 104 is formed by the agglomeration of sprayed liquid droplet dots, therefore even if the distance between the jet dispenser 122 and the surface of the porous support body 97 changes due to bending of the porous support body 97, the thickness of the formed layer will not be directly affected. Therefore even if there are manufacturing errors in the porous support body 97, the layers can be formed in a correct thickness.

0077 Also, in the first mask layer forming step, feeding of the dot film deposition apparatus 110 is adjusted so that the center portion of the masking layer 104 is formed in convex shape. I.e., at the start of formation of each of the masking layers 104, increasing the amount by which the dot deposition apparatus 110 jet dispenser 122 is fed in the axial direction reduces the amount of overlap of formed dots in the axial direction, so that the formed masking layer 104 is made thin. Subsequently, the gradual reduction in the amount by which the jet dispenser 122 is fed causes the amount of overlap by formed dots to increase, so that the masking layer 104 is thickened. When the formation of one masking layer 104 is completed, the amount of overlap in the axial direction is reduced by the gradual increase in the amount by which the jet dispenser 122 is fed in the axial direction, thereby thinning the masking layer 104. In this manner, by forming the center portion of the masking layer 104 high in a convex shape, slurry contacted from the top of the masking layer 104 in the next fuel electrode forming step flows out to outside the masking layer 104 and drops. Thus the agglomeration of a large amount of slurry on the masking layer 104 resulting in the formation of fuel electrodes in unnecessary parts thereof can be suppressed.

0078 Next, in step S4, as a fuel electrode forming step a fuel electrode layer 98, being one of the functional layers on the electricity generating elements 16a, is film-deposited on a porous support body 97 on which a masking layer 104 has been formed in step S3. Specifically, in the fuel electrode layer forming step which is the first surface deposition step, a slurry for forming a fuel electrode contacts the porous support body 97 from over the masking layer 104 and a fuel electrode layer 98 is surface film deposited in parts where no masking layer 104 is present. I.e., a porous support body 97 on which the masking layer 104 was formed in step S3 is affixed to the affixing jig 132 in the surface deposition apparatus 130, and slurry sprayed from the lower surface film deposition nozzle 136 coats the masking layer 104 from over as the porous support body 97 is rotated. Therefore in the fuel electrode forming step the surface deposition apparatus 130 functions as a fuel electrode layer forming apparatus.

0079 This fuel electrode forming step is a lower layer surface deposition step performed on the bottom-most side; this is the surface deposition step in which each of the fuel electrode layers 98 on all the electricity generating elements 16a formed on a single porous support body 97 are simultaneously surface film deposited. Thus in the fuel electrode forming step, because the fuel electrode layer 98 is formed by surface film deposition, the surface of the fuel electrode layer 98 can be formed smoothly without leaving dot traces in the dot film deposition.

0080 In the present embodiment the slurry used in the fuel electrode forming step is a liquid in which a mixture of NiO power and 10YSZ powder is suspended in an alcohol solvent, while on the other hand the mask forming agent forming the masking layer 104 is an oil-resistant substance. Therefore slurry does contact the entire porous support body 97 from over the masking layer 104, but slurry on the masking layer 104 is repelled by the mask forming agent and does not agglomerate on the masking layer 104. As a result, as shown in Fig. 10B, the fuel electrode layer film is formed only in parts where there is no masking layer 104. Moreover, as shown in Fig. 4, slurry agglomerated on the porous support body 97 is repelled by the oil-resistant mask forming agent and does not adhere to the masking layer 104, therefore the edge portion is agglomerated in a rounded shape due to surface tension on the slurry. Also, in the present embodiment an oil-resistant material is used as the mask forming agent, but depending on the slurry used, a water-resistant mask forming agent can also be used.

0081 In addition, in the fuel electrode forming step, a drying step (not shown) for drying agglomerated slurry is performed after the fuel electrode layer film is formed on the porous support body 97. In the present embodiment the slurry is dried in the drying step for approximately 5 minutes at approximately 100°C. Note that the masking layer 104 formed on the porous support body 97 continues to be maintained as is even after the drying step.

0082 Next, in step S5, a provisional sintering step is executed. In the provisional sintering step a porous support body 97, on which a fuel electrode layer film has been formed in step S4, is heated by a heating oven (not shown) and provisionally sintered. As shown in Fig. 10C, a masking layer 104 formed on the porous support body 97 is vaporized and eliminated by the provisional sintering step, and the porous support body 97 under the masking layer 104 is exposed. In the present embodiment the fuel electrode layer 98 is heated by a heating oven for approximately 2 hours at approximately 1000°C and hardened. The color of the provisionally sintered NiO/YSZ fuel electrode layer 98 is light green.

0083 Next, in step S6, as a first interconnector forming step, an interconnector layer is formed by the dot deposition apparatus 110 on the fuel electrode layer 98 provisionally sintered in step S5. Specifically, in the first interconnector forming step, a first interconnector layer 102a, being a part of the interconnect layer 102, is formed by dot film deposition. I.e., the first interconnector forming step is a dot deposition step for forming a first interconnector layer 102a by forming slurry dots in a predetermined area on the fuel electrode layer 98 by continuously turning slurry for forming the first interconnector layer 102a into liquid droplet form and jetting it onto the area where the first interconnector layer 102a is to be formed, thereby forming the first interconnector layer 102a through the agglomeration of these dots. Therefore in the first interconnector forming step, the dot deposition apparatus 110 functions as an interconnector forming apparatus. Note that in the present embodiment a liquid in which LSTNF powder is suspended in an alcohol solvent may be used as the slurry for forming the first interconnector layer 102a.

0084 As shown in Fig. 10D, the first interconnector layer 102a is formed at one end portion on the fuel electrode layer 98. Positioning of the location where this first interconnector layer 102a is formed is carried out based on image analysis. I.e., an image is captured of the porous support body 97 affixed to the affixing jig 116 in the dot deposition apparatus 110, and the boundary line between the part where the fuel electrode layer 98 is formed on the porous support body 97 and the part where it is not formed is identified through image analysis. A predetermined first interconnector layer 102a is dot film deposited on the fuel electrode layer 98 based on this identified boundary line position. The identification of this boundary line is performed for each fuel electrode layer 98 formed on the porous support body 97.

0085 In the first mask forming step out of step S3 in Fig. 9, a position is determined by referencing the affixing jig 116, but in the first interconnector forming step, as a first position-determining step, the position is determined based on the position of each of the fuel electrode layers 98 using image analysis. Therefore irrespective of shrinkage of the porous support body 97 caused by provisional sintering, or changes in the position at which the porous support body 97 is attached, the first interconnector layer 102a can be accurately positioned relative to each of the fuel electrode layers 98. The masking layer 104 for forming the fuel electrode layer 98 is formed to be perpendicular to the rotational center line A of the porous support body 97. Therefore the edge of the fuel electrode layer 98 is formed to be perpendicular to the rotational center line A, so that regardless of the rotational position at which an image of the porous support body 97 is captured, the position of the boundary line between the fuel electrode layer 98 and the porous support body 97 is constant, and the position for forming the first interconnector layer 102a can be uniquely determined. Also, in the present embodiment the porous support body 97 is generally white, and the fuel electrode layer 98 is a pale green, therefore the brightness contrast is high and an accurate image analysis can be performed using monochrome image capture. Also, the time required for the image analysis can be shortened by performing an image analysis based on a monochrome image.

0086 Moreover, in the first interconnector forming step, a drying step (not shown) for drying the agglomerated slurry is performed after film deposition of the first interconnector layer 102a. In the present embodiment, in the drying step the slurry is dried for approximately 10 minutes at approximately 100°C.

0087 Next, in step S7, a provisional sintering step is executed. In the provisional sintering step, the porous support body 97, on which the first interconnector layer 102a film is formed in step S6, is heated by a heating oven (not shown) and provisionally sintered. In this provisional sintering step, the first interconnector layer 102a film formed on each of the fuel electrode layers 98 is hardened. In the present embodiment the first interconnector layer 102a is heated by a heating oven for approximately 2 hours at approximately 1000°C. The color of this provisionally sintered first interconnector layer 102a made of LSTNF is roughly brown.

0088 Next, in step S8, as a second mask forming step, a mask forming agent is coated onto the first interconnector layer 102a, provisionally sintered in step S7, using the dot deposition apparatus 110, thereby forming a masking layer 106. I.e., the second mask forming step is a dot deposition step for forming dots of mask forming agent on the first interconnector layer 102a by turning the mask forming agent into liquid droplet form and continuously jetting it onto the area where the masking layer 106 is to be formed, so that a masking layer 106 is formed by the agglomeration of these dots.

0089 As shown in Fig. 10E, the masking layer 106 is formed so as to cover the first interconnector layer 102a, leaving the two end portions thereof on the first interconnector layer 102a. Determining the position for forming this masking layer 106 is accomplished by image analysis using the camera 126 on the dot deposition apparatus 110 as a second position-determining step. The first interconnector layer 102a is brown, the porous support body 97 is roughly white, and the fuel electrode layer 98 is pale green, therefore the brightness contrast is high and positioning can be accurately determined using the captured image. The masking layer 106 is naturally dried after application of the mask forming agent. The mask forming agent used in the second mask forming step is the same as the master forming agent used in the first mask forming step.

0090 Next, in step S9, as an electrolyte layer forming step, an electrolyte layer 100, being one of the functional layers on the electricity generating elements 16a, is film-deposited on a porous support body 97 on which the masking layer 104 has been formed in step S8. Specifically, in the electrolyte layer forming step, which is the second surface deposition step, slurry for forming the electrolyte layer is brought into contact with the porous support body 97 from over the masking layer 106 by the surface deposition apparatus 130, and the electrolyte layer 100 is surface film deposited on the part where no masking layer 106 is present. Therefore in the electrolyte layer forming step the surface deposition apparatus 130 functions as an electrolyte layer forming apparatus. This electrolyte layer forming step is an upper layer surface deposition step for depositing a surface film on the surface film-deposited fuel electrode layer 98; each of the electrolyte layers 100 in all of the electricity generating elements 16a formed on a single porous support body 97 is simultaneously surface film deposited.

0091 In the present embodiment the slurry used in the electrolyte layer forming step is a liquid in which LSGM powder is suspended in an alcohol solvent. This slurry is brought into contact with the entirety of the porous support body 97 from over the masking layer 106, but the slurry is repelled by the masking layer 106 and does not agglomerate on the masking layer 106. As a result, as shown in Fig. 10F, the electrolyte layer 100 film is formed only in parts where there is no masking layer 106. I.e., the exposed part of the entirety of the porous support body 97, and the fuel electrode layer 98, and the edge parts on both sides of the first interconnector layer 102a not covered by the masking layer 106, will be covered with the electrolyte layer 100 film.

0092 Also, as shown in Fig. 4, because the edge portion of the fuel electrode layer 98 is formed to be round, the electrolyte layer 100 slurry flows into the boundary portion between the fuel electrode layer 98 and the porous support body 97 without gaps, and the occurrence of gaps underneath the electrolyte layer 100 can the prevented. In addition, the slurry for forming the electrolyte layer 100 is repelled by the masking layer 106 and does not adhere to the masking layer 106, therefore the edge portion thereof is agglomerated in a rounded shape due to surface tension. In the electrolyte layer forming step, the electrolyte layer 100 is formed by surface film deposition, therefore no dot traces are created, and a smooth surface can be obtained. Also, because the electrolyte layer 100 is formed on the surface film-deposited fuel electrode layer 98, there is also no loss of smoothness caused by unevenness in the lower layer surface.

0093 In addition, in the electrolyte layer forming step a drying step (not shown) for drying agglomerated slurry is performed after the electrolyte layer 100 film is formed on the porous support body 97. In the present embodiment, in the drying step the slurry is dried for approximately 5 minutes at approximately 100°C. Note that the masking layer 106 formed on the porous support body 97 continues to be maintained as is even after the drying step.

0094 Next, in step S10, a provisional sintering step is executed. In the provisional sintering step, a porous support body 97, on which an electrolyte layer 100 has been formed in step S10, is heated by a heating oven (not shown) and provisionally sintered. As shown in Fig. 10G, the masking layer 106 formed on the first interconnector layer 102a is vaporized and eliminated by the provisional sintering step. The part of the first interconnector layer 102a which had been covered by the masking layer 106 is thus exposed. In the present embodiment the electrolyte layer 100 is heated by a heating oven for approximately 2 hours at approximately 1000°C and hardened. The color of this provisionally sintered LSGM electrolyte layer 100 is approximately skin-colored.

0095 Next, in step S11, as a second interconnector forming step, a second interconnector layer is formed so as to be electrically connected to the first interconnector layer 102a, which is exposed by provisional sintering in step S10. Specifically, as shown in Fig. 10H, in the second interconnector forming step a second interconnector layer 102b is formed by the dot deposition apparatus 110 so as to cover the exposed first interconnector layer 102a and the edge portion of the electrolyte layer 100 adjacent to this exposed part. I.e., the second interconnector forming step is a dot deposition step for forming a first interconnector layer 102a by forming slurry dots in a predetermined area on the fuel electrode layer 98 by continuously turning slurry for forming the second interconnector layer 102b into liquid droplet form and jetting it onto the area where the second interconnector layer 102b is to be formed, thereby forming the second interconnector layer 102b through the agglomeration of these dots. Therefore in the second interconnector forming step the dot deposition apparatus 110 functions as an interconnector forming apparatus.

0096 Note that in the present embodiment a liquid in which SLT powder is suspended in an alcohol solvent can be used as the slurry for forming the second interconnector layer 102b. Thus in the present embodiment the first interconnector layer 102a and the second interconnector layer 102b are formed of different materials. Moreover, in the second interconnector forming step a drying step (not shown) for drying the agglomerated slurry is performed after film deposition of the second interconnector layer 102b. In the present embodiment the slurry is dried in the drying step for approximately 10 minutes at approximately 100°C. Note that in the second interconnector forming step, determination of the position of the part for forming the second interconnector layer 102b is carried out using image analysis as a third position-determining step. In the third position-determining step, the boundary line is identified by the difference in color between the provisionally sintered first interconnector layer 102a and the electrolyte layer 100.

0097 Next, in step S12, a first provisional sintering step is executed. In the first provisional sintering step, the porous support body 97, fuel electrode layer 98, electrolyte layer 100, first interconnector layer 102a, and second interconnector layer 102b are heated by a heating oven (not shown) and sintered. The porous support body 97 and each of the functional layers formed thereon are thus integrated into a single body. In the present embodiment heating is achieved by the heating oven in the first sintering step at a temperature of approximately 1300°C for approximately 2 hours. Note that in the present embodiment, after the first sintering step the electrolyte layer 100 is approximately black, and the second interconnector layer 102b is also black, but the end portion of the second interconnector layer 102b overlapping the electrolyte layer 100 is approximately white.

0098 Next, in step S13 as an air electrode forming step, an air electrode layer, being the outermost functional layer, is formed on the electrolyte layer 100 sintered in step S12. Specifically, as shown in Fig. 10I, in the air electrode forming step, which is the outermost layer deposition step, an air electrode layer 101 is formed by the dot deposition apparatus 110 so as to cover the second interconnector layer 102b and a portion of the electrolyte layer 100. I.e., the air electrode forming step is a dot deposition step in which, by turning the slurry for forming the air electrode layer 101 into liquid droplet form and continuously jetting it onto the area where the air electrode layer 101 is to be formed, slurry dots are formed in a predetermined area, forming the air electrode layer 101 by the agglomeration of these dots. Therefore in the air electrode forming step the dot deposition apparatus 110 functions as an air electrode layer forming apparatus.

0099 In the air electrode forming step, as shown in Fig. 4, the feed speed of the dot deposition apparatus 110 is adjusted so that the thickness of the edge portion of the air electrode layer 101 is made thinner than the thickness at the center portion thereof. I.e., at the start of formation of air electrode layer 101, increasing the amount by which the dot deposition apparatus 110 jet dispenser 122 is fed in the axial direction reduces the amount of overlap of formed dots in the axial direction, so that the formed air electrode layer 101 is made thin. Subsequently, the gradual reduction in the amount by which the jet dispenser 122 is fed causes the amount of overlap by formed dots to increase, so that the air electrode layer 101 is thickened. When the formation of one air electrode layer 101 is completed, the amount of overlap in the axial direction is reduced by the gradual increase in the amount by which the jet dispenser 122 is fed in the axial direction, thereby thinning the air electrode layer 101. Thus post-sintering peeling of the air electrode layer 101, which is the outermost functional layer, can be prevented by forming a thin air electrode layer 101 edge portion.

0100 In the present embodiment a liquid in which LSCF powder is suspended in an alcohol solvent can be used as the slurry for forming the air electrode layer 101. Note that in the air electrode forming step, determining the position of the part where the air electrode layer 101 is to be formed is executed using image analysis as a fourth position-determining step. In the fourth position-determining step, the boundary line is identified by the difference in color between the post-first sintering step second interconnector layer 102b and the electrolyte layer 100. In addition, in the air electrode forming step, a drying step (not shown) for drying agglomerated slurry is performed after the air electrode layer 101 film is formed. In the present embodiment the slurry is dried in the drying step for approximately 10 minutes at approximately 100°C.

0101 Next, in step S14, a second provisional sintering step is executed. In the second sintering step, the air electrode layer 101 formed in step S13 is heated by a heating oven (not shown) and sintered. The air electrode layer 101 is thereby integrated as a single body with the electrolyte layer 100 and the second interconnector layer 102b formed on the bottom side thereof. In the present embodiment, heating is performed by the heating oven in a second sintering step at a temperature of approximately 1000°C for approximately 2 hours.

0102 The individual fuel cells 16 of the present embodiment are completed by this second sintering step.

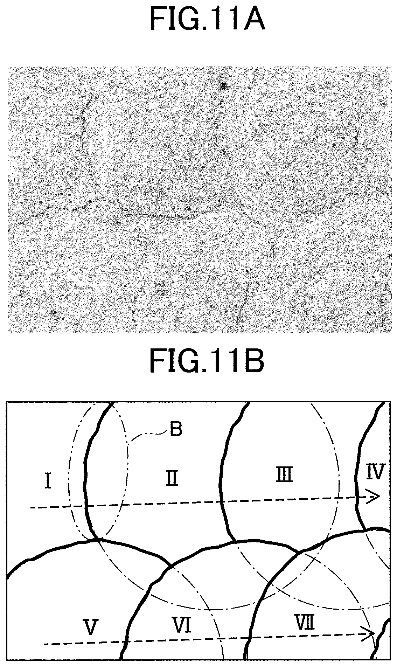

Figs. 11A, 11B are diagrams showing the surface state of an air electrode layer after completion of a second sintering step; Fig. 11A is an expanded photograph of the surface of the air electrode layer 101; Fig. 11B is a schematic diagram of each of the dots forming a part corresponding to the expanded photograph.

0103 As shown in Fig. 11A, fine cracks are formed in positions corresponding to the edges of the dots on the surface of the sintered air electrode layer 101. These fine cracks on the surface occur because the dot film-deposited air electrode layer 101 shrinks in the second sintering step. Here, in the air electrode forming step (step S13), the porous support body 97, formed up through second interconnector layer 102b, is rotated while at the same time liquid droplets of slurry are continuously jetted as the jet dispenser 122 is moved along the guide rail 120. Therefore each of the dots formed by adhesion of the liquid droplets is arrayed so as to describe a spiral, while mutually overlapping in the circumferential and axial directions.

0104 Note that in the present embodiment, a dot formed by a single liquid droplet sprayed out from the jet dispenser 122 is approximately circular with a diameter of approximately 500 µm, and the trace of that dot remains on the surface as appropriate. By forming the air electrode layer 101 in this manner, fine cracks occur in the surface of the air electrode layer 101, resulting in a surface geometry capable of absorbing shrinkage caused by sintering. The diameter of the jet nozzle hole 128a on the jet dispenser 122 and the slurry viscosity, etc. are preferably adjusted so that dots with a diameter of approximately 200 to 1000 µm are formed.

Also, as a variant example, the dot deposition apparatus 110 can be adjusted so that approximately elliptical dots are formed; in this case a length of approximately 200 µm to 1000 µm is desirable for the long axis of the dot. The shape of the dot can be appropriately adjusted using the shape of the jet nozzle hole 128a, the rotational speed (rpm) of the porous support body 97, the liquid droplet jetting interval, and the slurry viscosity, etc. The overlap size can be increased when dots are agglomerated by thus adopting an elliptical shape for each of the slurry dots agglomerated in the air electrode forming step so that the peeling suppression effect is increased. Also, by adopting a length of approximately 200 µm to 1000 µm for the long axis of the ellipse, the effects of thermal expansion by the air electrode layer 101 can be sufficiently absorbed, peeling can be prevented, and the time required to form an air electrode layer can be reduced.

0105 Fig. 11B is a schematic representation of the layout of dots formed in this way. In Fig. 11B, a dot I is first formed; next, while the porous support body 97 is being slightly rotated, a dot II is formed to partially overlap the dot I. Continuing, dot III and dot IV are formed in sequence so as to partially overlap. Thus when the dots are sequentially arrayed and the porous support body 97 has returned to the position of dot I, the jet dispenser 122 is sent to the position of dot V in the axial direction, and dot V partially overlaps with dot I in the axial direction. Continuing, dot VI and dot VII are formed in sequence so as to partially overlap.

0106 Because the dots are arrayed in this manner, the boundary line exposed on the surface of the air electrode layer 101 in dot II, for example, is only the part shown by B in Fig. 11B; other parts of the boundary line are covered by other dots and not exposed on the surface. Therefore even if cracks occur on the exposed boundary line, other parts of the boundary line are held down by other dots, therefore dots do not fall off due to the occurrence of cracking. In addition, by causing fine cracks to occur in the surface of the air electrode layer 101, distortions caused by differential thermal expansion during sintering are distributed, and stresses can be absorbed. Therefore major peeling does not occur in the air electrode layer 101.

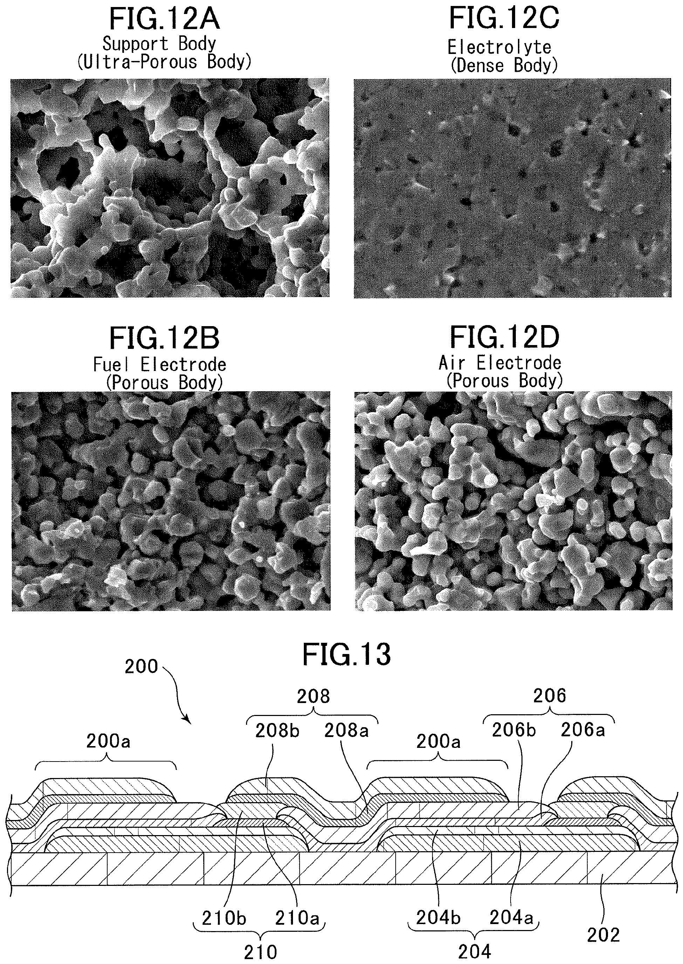

0107 Figs. 12A-12D show electron micrographs of the various parts of an individual fuel cell 16 completed in this way. Fig. 12A shows an electron micrograph of the porous support body 97; Fig. 12B is the fuel electrode layer 98; Fig. 12C is the electrolyte layer 100; Fig. 12D is an electron micrograph of the air electrode layer 101.

0108 As shown in Fig. 12A, the porous support body 97 is constituted to support each of the functional layers; a higher transmissivity to fuel gas is preferred, and an ultra-porous structure is adopted. As shown in Fig. 12B, the fuel electrode layer 98 has the function of passing through hydrogen molecules in the fuel and serving as a conductor for delivering electrical charges produced by the electricity generating reaction, and is thus a porous body with fewer gaps than the porous support body 97. As shown in Fig. 12B, the fuel electrode layer 98 has the function of passing through hydrogen molecules in the fuel and serving as conductor for delivering electrical charges produced by the electricity generating reactions, and is thus a porous body with fewer gaps than the porous support body 97. Also, as shown in Fig. 12C, the electrolyte layer 100 is constituted to produce the electricity generating reaction and to assure airtightness on the fuel electrode side and on the air electrode side.

0109 In Fig. 10I, the part where the fuel electrode layer 98, the electrolyte layer 100, and the air electrode layer 101 are sequentially laminated onto the porous support body 97 functions as an electricity generating element 16a, formed on an individual fuel cell 16. Charges produced by these electricity generating elements 16a are carried through the air electrode layer 101 of the current collecting portion (the part in which only the electrolyte layer 100 and the air electrode layer 101 are laminated onto the porous support body 97) and are connected to the anode in the adjacent electricity generating element 16a through a connecting portion (the part in which the fuel electrode layer 98, the first interconnector layer 102a, the second interconnector layer 102b, the electrolyte layer 100 and the air electrode layer 101 are sequentially laminated onto the porous support body 97). Also, the part in which the second interconnector layer 102b and the air electrode layer 101 are not formed on the electrolyte layer 100 (the part where the electrolyte layer 100 is exposed) functions as an insulating portion for insulating between each of the air electrode layers 101 in adjacent electricity generating elements 16a.

0110 In the method for manufacturing a solid oxide fuel cell of the first embodiment of the invention, the air electrode layer 101, being the outermost functional layer formed by the air electrode forming step (step S13 in Fig. 9) which is the outermost layer deposition step, contains remaining traces of agglomerated dots; ring-shaped cracks are formed on the perimeter of each of the traces in a second sintering step (step S14 in Fig. 9), thereby improving the durability of the individual fuel cells 16. I.e., the formation of fine ring-shaped cracks (Figs. 11A, 11B) around each remaining dot suppresses the growth of large cracks, so that peeling of the air electrode layer 101 can be prevented. This allows the prevention of peeling caused by differential thermal expansion characteristics between layers, even when the air electrode layer 101 is formed to be thick. Also, the size of cracks occurring in the air electrode layer 101 is determined by the size of the dots produced by the spraying of liquid droplets of slurry, therefore the cracks which do occur can be controlled to an intended size, and peeling caused by crack growth can be prevented. Since the occurrence of peeling, etc. based on differential thermal expansion characteristics is thus prevented, the degree of freedom to select materials for forming the air electrode layer 101 is increased so that individual solid oxide fuel cells 16 with high electrical generating performance can be obtained.

0111 Using the method of manufacturing a solid oxide fuel cell of the present embodiment, each of the dots is formed so that a portion thereof overlaps (Fig. 11B), therefore peeling can be reliably prevented by the occurrence of cracks around each of the traces. I.e., because a portion of each dot overlaps, a portion of the perimeter of a given dot is covered by another dot, so that continuous cracking around the entire perimeter of a single dot can be prevented. Therefore the occurrence of cracks around the entire perimeter of each dot remaining in the air electrode layer 101, and the resulting falling off of dots, can be prevented.

0112 Moreover, by using the method of manufacturing a solid oxide fuel cell of the present embodiment, the fuel electrode layer 98, being the first functional layer, is formed by surface film deposition (step S4 in Fig. 9), therefore the fuel electrode layer 98 can be efficiently formed, and stress acting on the fuel electrode layer 98 can be reduced. I.e., in contrast to the small surface area per unit time of the film which can be formed in dot film deposition by continuous spraying of slurry in droplets, surface film deposition enables the simultaneous formation of a fuel electrode layer with multiple generating elements 16a, so that the fuel electrode layer 98 can be formed in a short time. Also, in layers formed by surface film deposition, the surface is more smoothly formed than with dot film deposition, therefore the concentration of stress in a portion of the fuel electrode layer 98 caused by unevenness in the surface during reduction processing of the fuel electrode layer 98 can be suppressed. On the other hand, no reduction processing of the air electrode layer 101, in which dot traces are left on the surface, is required for the outermost functional layer, so the occurrence of stress caused by reduction processing can be avoided.

0113 Also, using the method of manufacturing a solid oxide fuel cell of the present embodiment, the air electrode layer 101 formed in the air electrode forming step (step S13 in Fig. 9) is capable of preventing peeling in the edge portion of the air electrode layer 101, since slurry dots are agglomerated in such a way that the edge portion thereof is made thin. I.e., even when each of the slurry dots is formed so that a portion thereof overlaps, the edge portion of the air electrode layer 101 has a part in which portions of the perimeter of the dot traces are not covered by other dots. By forming the edge portion of the air electrode layer 101 to be thin, peeling of the edge portion, where peeling is likely to occur, can be reliably prevented.

0114 Moreover, using the method of manufacturing the solid oxide fuel cell of the present invention, individual fuel cells 16 with high electricity generating performance can be manufactured because the air electrode layer 101 is made of LSCF. I.e., LSCF has a high oxygen ion exchange performance and is desirable as an air electrode layer 101 material, but presents the problem that it can easily peel due to its differential thermal expansion characteristics relative to the materials of the other functional layers, being fuel electrode layer 98 and electrolyte layer 100. Therefore in the past forming an air electrode layer 101 of LSCF in order to reduce the effect of stress on the air electrode layer 101 required forming a thin air electrode layer. Using individual fuel cells 16 of the present embodiment, ring-shaped cracks form around the trace of each dot (Figs. 11A, 11B), therefore the effect of stress can be ameliorated and a thick air electrode layer 101, in which the air electrode layer 101 itself is strong, can be constituted of LSCF.

0115 Next, referring to Fig. 13, we explain an individual solid oxide fuel cell according to a second embodiment of the invention.

An individual fuel cell according to a second embodiment of the invention differs from the above-described first embodiment in that each of the three functional layers, being the fuel electrode layer, the electrolyte layer, and the air electrode layer, is respectively formed of two layers. Therefore here we explain only the aspects of the second embodiment of the invention different from the first embodiment of the invention, and we omit an explanation of similar constitutions, operations, and effects.

0116 Fig. 13 is a cross-section showing an expanded view of a functional layer formed on the surface of a porous support body in an individual fuel cell according to a second embodiment of the invention.

As shown in Fig. 13, the individual fuel cells 200 of the present embodiment have a cylindrical porous support body 202 and three functional layers formed thereon, being a fuel electrode layer 204, an electrolyte layer 206, and an air electrode layer 208. Formed on the individual fuel cells 200 are multiple electricity generating elements 200a, formed by placement in sequence of a fuel electrode layer 204, an electrolyte layer 206, and an air electrode layer 208 on a porous support body 202. Each of these electricity generating elements 200a is electrically connected in series by the interconnector layer 210. In the present embodiment, twelve electricity generating elements 200a are formed on a single individual fuel cell 200, and these are connected by the interconnector layer 210.

0117 Next we explain the constitution of the porous support body 202 and each of the functional layers.

In the present embodiment, as in the first embodiment, the porous support body 202 is formed by extruding a cylindrical mixture using forsterite as its main component, with a binder added, then sintering this extrusion.

In the present embodiment, the fuel electrode layer 204 is formed of two layers, being a bottom fuel electrode layer 204a and a top fuel electrode layer 204b formed thereon. Of these two layers, the bottom fuel electrode layer 204a, like the first embodiment, is a semiconductor thin film comprised of a blend of NiO powder and 10YSZ (10 mol% Y2O₃ -- 90 mol% ZrO₂ powder. On the other hand, the top fuel electrode layer 204b is a semiconductor thin film comprising a blend of NiO powder and GDC (10 mol% Gd₂O₃ - 90 mol% CeO₂) powder.

0118 Here the fuel electrode layer generally must comprise a catalyst function for causing the reaction between hydrogen and oxygen ions, and a function for carrying charges (electrons) produced by the reaction. In the individual fuel cell 200 of the present embodiment, the bottom fuel electrode layer 204a is constituted by a material with higher electrical conductivity than the top fuel electrode layer 204b, while on the other hand the top fuel electrode layer 204b is formed of a material with higher catalytic activity than the bottom fuel electrode layer 204a. Thus charges produced in the top fuel electrode layer 204b directly beneath the electrolyte layer 206 can be efficiently carried by the bottom fuel electrode layer 204a, and a high performance fuel electrode layer 204 can be constituted.

0119 In the present embodiment, the solid electrolyte layer 206 comprises a bottom electrolyte layer 206a, and a top electrolyte layer 206b formed on top thereof. Of these two layers, the bottom electrolyte layer 206a is a thin film comprising a cerium composite oxide (LDC400; i.e. 40 mol% La₂O₃ - 60 mol% CeO₂) powder or the like. On the other hand the top electrolyte layer 206b, like the first embodiment, is a thin film comprising an LSGM powder composed of La_{0.9}Sr_{0.1}Ga_{0.8}Mg_{0.2}O₃.

0120 The bottom electrolyte layer 206a functions as a reaction-suppressing layer; chemical reaction between the top fuel electrode layer 204b and the top electrolyte layer 206b is suppressed by the bottom electrolyte layer 206a.

The top electrolyte layer 206b, like the electrolyte layer in the first embodiment, produces electrical energy by mediating the reaction of an oxide ion with hydrogen or carbon monoxide.

0121 In the present embodiment, an air electrode layer 208 comprises a bottom air electrode layer 208a and a top air electrode layer 208b formed thereon. Of these two layers, the bottom air electrode layer 208a is a semiconductor thin film comprised of an LSCF powder with an La_{0.6}Sr_{0.4}Co_{0.2}Fe_{0.2}O₃ composition.

0122 Here the air electrode layer generally must comprise a catalytic function for ionizing oxygen in air, and a function for carrying charges for the oxygen to react with. In the individual fuel cell 200, the bottom air electrode layer 208a is constituted of a material with a higher catalytic activity than the top air electrode layer 208b (a material with a high oxygen ion exchange performance), while on the other hand the top air electrode layer 208b is formed of a material with a higher electron conductivity than the bottom air electrode layer 208a. Thus oxygen can be efficiently ionized in the bottom air electrode layer 208a adjacent to the electrolyte layer 206 using electrons transported by the top air electrode layer 208b, thereby constituting a high performance air electrode layer 208.

0123 The interconnect layer 210, like the first embodiment, comprises a first interconnector layer 210a and a second interconnector layer 210b disposed thereon.

0124 We explain a method for manufacturing an individual fuel cell according to a second embodiment of the invention.

Here we explain only those points which differ from the manufacturing process of the first embodiment described using Fig. 9.

First, steps S1-S3 in Fig. 9 are the same as the first embodiment.

0125 Next, in the first embodiment, in step S4 of Fig. 9, agglomerated slurry is dried in a drying step after surface film deposition of a fuel electrode layer by the surface deposition apparatus 130. In the second embodiment, first the bottom fuel electrode layer 204a is film deposited by the surface deposition apparatus 130 and dried by the drying step, then the top fuel electrode layer 204b is film deposited by the surface deposition apparatus 130 and dried. This results in the formation of a bottom fuel electrode layer 204a in parts where no masking layer is formed on the porous support body 202, and in the formation of a top fuel electrode layer 204b on this bottom fuel electrode layer 204a.

0126 Here the viscosity of the slurry used to form the bottom fuel electrode layer 204a is made higher than the viscosity of the slurry used to form the top fuel electrode layer 204b. I.e., excessive penetration of slurry into the porous support body 202 can be prevented by increasing the viscosity of the slurry used for the bottom fuel electrode layer 204a, which is directly deposited on the porous support body 202. Also, reducing the viscosity of the slurry used for the top fuel electrode layer 204b enables the agglomerated slurry to spread easily so that the smoothness of the surface of the agglomerated top fuel electrode layer 204b can be increased. Note that the viscosity of the slurry can be appropriately set based on the material powder constituting the fuel electrode layer, the ratio of the solvent in which this is suspended, the grain size of the suspended powder, the type of solvent use for the suspension, etc.

0127 If the top fuel electrode layer 204b degree of smoothness is low and layer thickness is non-uniform, the electricity generating reaction occurring in the fuel electrode layer will be non-uniform in each of the parts on the fuel electrode layer. When the electricity generating reaction is non-uniform, current concentrates in parts where the electricity generating reaction is strong, and the electricity generating effect in the individual fuel cell 200 becomes unstable. This type of current concentration can be suppressed using the present embodiment. Furthermore, negative effects on the smoothness of the electrolyte layer 206 and air electrode layer 208 agglomerated on the fuel electrode layer 204 can be prevented by increasing the smoothness of the top fuel electrode layer 204b surface.

0128 In addition, steps S5-S8 in Fig. 9 are the same as the first embodiment.

Next, in the first embodiment, in step S9 of Fig. 9, agglomerated slurry is dried in a drying step after surface film deposition of an electrolyte layer by the surface deposition apparatus 130. In the second embodiment, first the bottom electrolyte layer 206a is film deposited by the surface deposition apparatus 130 and dried by the drying step, then the top electrolyte layer 206b is film deposited by the surface deposition apparatus 130 and dried. A bottom electrolyte layer 206a is thus formed in parts where no masking layer is formed on the first interconnector layer 210a, and a top electrolyte layer 206b is formed on this bottom electrolyte layer 206a.

0129 Furthermore, steps S10-S12 in Fig. 9 are the same as the first embodiment.

Next, in the first embodiment, in step S13 of Fig. 9, agglomerated slurry is dried in a drying step after surface film deposition of an air electrode layer by the dot deposition apparatus 110. In the second embodiment a bottom air electrode layer 208a is first deposited by the dot deposition apparatus 110 and dried by a drying step, then the top air electrode layer 208b is again deposited by the dot deposition apparatus 110 and dried. In this manner, a bottom air electrode layer 208a and top air electrode layer 208b are formed so as to cover part of the second interconnector layer 210b and the top electrolyte layer 206b.

0130 Here, the viscosity of the slurry used to form the bottom air electrode layer 208a is made lower than the viscosity of the slurry used to form the top air electrode layer 208b. I.e., by reducing the viscosity of the slurry used for the bottom air electrode layer 208a, liquid droplets of slurry adhering to the top electrolyte layer 206b which were jetted by the jet dispenser 122 spread out thinly, so that a smooth bottom air electrode layer 208a can be formed with a low tendency for dot traces to remain. On the other hand, by increasing the viscosity of slurry used for the top air electrode layer 208b, the liquid droplets of jetted slurry adhering to the bottom air electrode layer 208a do not spread very much, and the top air electrode layer 208b formed as a result is made thicker. Thus by constituting a smooth bottom air electrode layer 208a with a high catalytic activity, the catalytic reaction in the air electrode layer can be made uniform, and current concentration caused by non-uniformity of the catalytic reaction can be suppressed. Also, the top air electrode layer 208b is formed to be thick, therefore the electrical resistance of the air electrode layer can be reduced and the top air electrode layer 208b, being the outermost layer most subject to peeling, can be strengthened.

Finally, a solid oxide fuel cell 200 of the present embodiment is completed using the second sintering step in step S14 of Fig. 9, which is the same as the first embodiment.

0131 Using the method of manufacturing a solid oxide fuel cell of the second embodiment of the invention, the air electrode layer 208, which is the outermost functional, has a bottom air electrode layer 208a and a top air electrode layer 208b formed on this bottom air electrode layer 208a. Also, the bottom air electrode layer 208a is formed to be thinner and smoother than the top air electrode layer 208b, of a material with a higher oxygen ion exchange performance than the top air electrode layer 208b, and the top air electrode layer 208b is formed of a material with a higher electron conductivity (electrical conductivity) than the bottom air electrode layer 208a. This enables high-efficiency manufacturing of a solid oxide fuel cell 200 with stable performance. I.e., forming a thin and smooth bottom air electrode 208a of a material with a high ion exchange performance enables the oxygen ion exchange performance in each part of the generating element 200a to be made uniform, so that concentration of electrical current in parts with high ion exchange performance can be prevented. Also, forming a thick top air electrode layer 208b of a material with a high electron conductivity (electrical conductivity) enables the electrical resistance of the top air electrode layer 208b to be reduced, so that generated charges can be transferred with low loss.

0132 We have described above a preferred embodiment of the present invention, but various changes may be added to the above-described embodiments. In particular, in the above-described embodiment, using the surface deposition apparatus shown in Fig. 7 slurry was made, by spraying from below, to contact a porous support body to which masking had been applied and surface film deposition applied, but as a variant example, slurry may be brought into contact from various directions. For example, slurry can be brought into contact by causing it to flow downward from over a porous support body to which masking has been applied. Or, slurry can be brought into contact by misting the slurry onto a porous support body to which masking has been applied. Furthermore, slurry can be brought into contact by soaking a porous support body to which masking has been applied in a tank containing slurry.

0133 In the above-described embodiment, functional layers were laminated onto a porous support body in the sequence of fuel electrode layer, electrolyte layer, and air electrode layer, but it is also possible to form the functional layers in the sequence of air electrode layer, electrolyte layer, and fuel electrode layer. In this case, air is flowed into the interior of the porous support body and fuel gas is flowed to the outside thereof to generate electricity.

Moreover, in the embodiment described above the porous support body was cylindrical, but the present invention may be applied to solid oxide fuel cells of various forms such as elliptical and flat shapes.

### Explanation of Reference Numerals

0134
1: solid oxide fuel cell system
2: fuel cell module
4: auxiliary unit
6: housing
8: fuel cell housing container
10: generating chamber
16: individual fuel cell of the present embodiment of the invention (solid oxide fuel cell)
16a: electricity generating element
18: exhaust collection chamber
20: fuel gas supply flow path
21: exhaust gas discharge flow path
22: oxidant gas supply fuel path
24: water supply source
26: pure water tank
28: water flow volume regulator unit
30: fuel supply source
34: heat exchanger
35: electromagnetic valve
36: desulfurizer
38: fuel blower
40: air supply source
45: air flow regulator unit
50: hot water production apparatus
54: inverter
56: oxidant gas introducing pipe
58: exhaust gas exhaust pipe
60: combustion catalyst
61: sheath heater
62: ignition heater
63: first affixing member
64: inside cylinder member
64b: small hole
65: intermediate cylindrical member
66: outside cylinder member
68: inside cylinder container
70: outside cylinder container
72: dispersion chamber bottom member
72a: insertion pipe
74: oxidant gas injecting pipe
76: fuel gas dispersion chamber
80: bus bar
82: current collector
86: vaporizing portion
86a: angled plate
88: water supply pipe
90: fuel gas supply pipe
92: fuel gas supply flow path partition
92a: injection port
94: reforming portion
96: reforming catalyst
97: porous support body
98: fuel electrode layer
100: electrolyte layer
101: air electrode layer
102: interconnect layer
102a: first interconnector layer
102b: second interconnector layer
104: masking layer
106: masking layer
110: dot deposition apparatus
112: base
114: motor
116: affixing jig
116a: centering rod
118: head portion
120: guide rail
122: jet dispenser
124: slurry vessel
126: camera
128: nozzle portion
128a: jet nozzle hole
128b: indentation
128c: slurry supply pathway
129: jet actuator
129a: flexible plate
129b: projecting portion
130: surface deposition apparatus
131: base
132: affixing jig
134: motor
136: surface film deposition nozzle
138: pump
139: slurry vessel
200: individual fuel cell of the second embodiment of the invention (solid oxide fuel cell)
200a: electricity generating element
202: porous support body
204: fuel electrode layer
204a: bottom fuel electrode layer
204b: top fuel electrode layer
206: electrolyte layer
206a: bottom electrolyte layer
206b: top electrolyte layer
208: air electrode layer
208a: bottom air electrode layer
208b: top air electrode layer
210: interconnector layer
210a: first interconnector layer
210b: second interconnector layer

## Claims

1. A method for manufacturing a solid oxide fuel cell (16) in which multiple electricity generating elements (16a), including functional layers of a fuel electrode layer, an electrolyte layer, and an air electrode layer are formed on a porous support body, and the electricity generating elements (16a) are connected using an interconnector (102), the method comprising steps of:
a support body forming step (S1) for forming the porous support body (97);
a film deposition step (S3-S9) for forming, in sequence, the fuel electrode layer (98) and the electrolyte layer (100) on the porous support body;
an outermost layer deposition step (S13) for forming the air electrode layer (101) on the two functional layers formed in the film deposition step (S3-S9), in which dots of slurry are formed by continuously jetting liquid droplets of the slurry for making the air electrode layer (101), and the air electrode layer (101) is formed by the agglomeration of the dots and is thicker than the fuel electrode layer (98); and
a sintering step (S14) for heating and sintering the functional layers;
wherein in the air electrode layer (101) formed by the air electrode layer deposition step (S13), traces of the agglomerated dots are left, and ring-shaped cracks are formed around each of the dot traces by the sintering step (S14).

2. The solid oxide fuel cell manufacturing method of Claim 1, wherein in the air electrode layer deposition step (S13), each dot of the slurry is formed so that a portion thereof overlaps.

3. The solid oxide fuel cell manufacturing method of Claim 1 or 2, wherein the film deposition step (S3-S9) for forming the fuel electrode layer (98) is performed by surface depositing in which deposition of the fuel electrode layers (98) of the multiple electricity generating elements (16a) is simultaneously performed by bringing the slurry for making the fuel electrode layer (98) into contact with the porous support body (97).

4. The solid oxide fuel cell manufacturing method of any of Claims 1 to 3, wherein the air electrode layer[[s]] (101) formed in the air electrode layer deposition step (S13) are formed by agglomerating the slurry dots in such a way that edge portions of the air electrode layer[[s]] are made thinner than the intermediate portion of the air electrode layer.

5. The solid oxide fuel cell manufacturing method of any of Claims 1 to 4, wherein the air electrode layer (101) has a bottom air electrode layer and a top air electrode layer formed on the bottom air electrode layer; the bottom air electrode layer is formed of a material with a higher oxygen exchange performance than the top air electrode layer, and is formed to be smooth and to be thinner than the top air electrode layer, whereas the top air electrode layer is formed of a material with a higher electron conductivity than the bottom air electrode layer.

6. The solid oxide fuel cell manufacturing method of any of Claims 1 to 5, wherein the air electrode layer (101) is made of LSCF.

7. The solid oxide fuel cell manufacturing method of any of Claims 1 to 6, wherein each of the slurry dots agglomerated in the outermost layer deposition step (S13) is elliptical in shape.

8. The solid oxide fuel cell manufacturing method of Claim 7, wherein length of long axis of the elliptical dot is 100 µm to 500 µm.

9. A solid oxide fuel cell (16) manufactured by the solid oxide fuel cell manufacturing method set forth in any one of Claims 1 through 8.

## Patentansprüche

1. Verfahren zum Herstellen einer Festoxidbrennstoffzelle (16), in welcher mehrere elektrizitätserzeugende Elemente (16a), umfassend funktionale Schichten einer Brennstoffelektrodenschicht, einer Elektrolytschicht und einer Luftelektrodenschicht auf einem porösen Stützkörper, gebildet werden, und wobei die elektrizitätserzeugenden Elemente (16a) miteinander unter Benutzung eines Verbinders (102) verbunden sind, wobei das Verfahren die folgenden Schritte aufweist:
einen Stützkörperherstellungsschritt (S1) zum Herstellen des porösen Stützkörpers (97);
ein Filmauftragsschritt (S3-S9) zum aufeinanderfolgenden Herstellen der Brennstoffelektrodenschicht (98) und der Elektrolytschicht (100) auf dem porösen Stützkörper;
einen Auftragsschritt für die äußerste Schicht (S13) zum Bilden der Luftelektrodenschicht (101) auf den zwei funktionalen Schichten, welche in dem Filmauftragsschritt (S3-S9) gebildet wurden, in welchem Suspensionspunkte durch kontinuierliches Ausstoßen von Flüssigkeitstropfen der Suspension zum Herstellen der Luftelektrodenschicht (101) gebildet werden, und wobei die Luftelektrodenschicht (101) durch Agglomeration der Punkte gebildet wird und dicker als die Brennstoffelektrodenschicht (98) ist; und
einen Sinterschritt (S14) zum Heizen und Sintern der funktionalen Schichten;
wobei in der Luftelektrodenschicht (101), welche durch den Luftelektrodenauftragsschritt (S13) gebildet ist, Spuren der agglomerierten Punkte übrig bleiben, und wobei ringförmige Risse um jede der Punktspuren durch den Sinterschritt (S14) gebildet werden.

2. Verfahren zum Herstellen einer Festoxidbrennstoffzelle nach Anspruch 1, wobei in dem Luftelektrodenlagenauftragsschritt (S13) jeder Punkt der Suspension so gebildet wird, dass ein Anteil davon überlappt.

3. Verfahren zum Herstellen einer Festoxidbrennstoffzelle nach Anspruch 1 oder 2, wobei der Filmauftragsschritt (S3-S9) zum Bilden der Brennstoffelektrodenschicht (98) durch Oberflächenauftrag gebildet wird, in welchem das Auftragen der Brennstoffelektrodenschichten (98) der mehreren elektrizitätserzeugenden Elemente (16a) gleichzeitig durch das in Kontakt bringen der Suspension zur Herstellung der Brennstoffelektrodenschicht (98) mit dem porösen Stützkörper (97) ausgeführt wird.

4. Verfahren zum Herstellen einer Festoxidbrennstoffzelle nach einem der Ansprüche 1 - 3, wobei die Luftelektrodenschichten (101), welche durch den Luftelektrodenauftragsschritt (S13) durch Agglomeration der Suspensionstropfen so gebildet werden, dass Kantenbereiche der Luftelektrodenschichten dünner als Mittelbereiche der Luftelektrodenschichten gemacht werden.

5. Verfahren zum Herstellen einer Festoxidbrennstoffzelle nach einem der Ansprüche 1 - 4, wobei die Luftelektrodenschicht (101) eine untere Luftelektrodenschicht und eine obere Luftelektrodenschicht aufweist, welche auf der unteren Luftelektrodenschicht ausgebildet ist; und wobei die untere Luftelektrodenschicht aus einem Material mit einer höheren Sauerstoffaustauschfähigkeit als die obere Luftelektrodenschicht gebildet und so ausgebildet ist, dass sie glatt und dünner als die obere Luftelektrodenschicht ist, während die obere Luftelektrodenschicht aus einem Material mit einer höheren Elektronenleitfähigkeit als die untere Luftelektrodenschicht gebildet ist.

6. Verfahren zum Herstellen einer Festoxidbrennstoffzelle nach einem der Ansprüche 1 - 5, wobei die Luftelektrodenschicht (101) aus LSCF gebildet ist.

7. Verfahren zum Herstellen einer Festoxidbrennstoffzelle nach einem der Ansprüche 1 - 6, wobei jeder der Suspensionspunkte, welche während des Auftragsschrittes (S13) für die äußerste Schicht agglomeriert wurden, eine elliptische Form hat.

8. Verfahren zum Herstellen einer Festoxidbrennstoffzelle nach Anspruch 7, wobei die Länge der längeren Achse der elliptischen Punkte zwischen 100 µm und 500 µm beträgt.

9. Festoxidbrennstoffzelle (16) hergestellt durch das Verfahren zum Herstellen einer Festoxidbrennstoffzelle nach einem der Ansprüche 1 - 8.

## Revendications

1. Procédé de fabrication d'une pile à combustible à oxyde solide (16) dans laquelle de multiples éléments générateurs d'électricité (16a), dont des couches fonctionnelles d'une couche d'électrode à combustible, une couche d'électrolyte, et une couche d'électrode à air sont formées sur un corps de support poreux, et les éléments générateurs d'électricité (16a) sont connectés à l'aide d'un interconnecteur (102), le procédé comprenant les étapes de :
une étape de formation de corps de support (S1) destinée à former le corps de support poreux (97) ;
une étape de dépôt de film (S3 à S9) destinée à former, en séquence, la couche d'électrode à combustible (98) et la couche à électrolyte (100) sur le corps de support poreux ;
une étape de dépôt de couche la plus externe (S13) destinée à former la couche d'électrode à air (101) sur les deux couches fonctionnelles formées dans l'étape de dépôt de film (S3 à S9), dans laquelle des points de boue sont formés en éjectant continuellement des gouttelettes liquides de la boue pour réaliser la couche d'électrode à air (101), et la couche d'électrode à air (101) est formée par l'agglomération des points et
est plus épaisse que la couche d'électrode à combustible (98) ; et
une étape de frittage (S14) destinée à chauffer et fritter les couches fonctionnelles ;
dans lequel dans la couche d'électrode à air (101) formée par l'étape de dépôt de couche d'électrode à air (S 13), des traces des points agglomérés sont délaissées, et des fissures en forme de bague sont formées autour de chacune des traces à points par l'étape de frittage (S14).

2. Procédé de fabrication de pile à combustible à oxyde solide selon la revendication 1, dans lequel dans l'étape de dépôt de couche d'électrode à air (S13), chaque point de la boue est formé de sorte qu'une portion en soit chevauchante.

3. Procédé de fabrication de pile à combustible à oxyde solide selon la revendication 1 ou 2, dans lequel l'étape de dépôt de film (S3 à S9) destinée à former la couche d'électrode à combustible (98) est réalisée par dépôt en surface dans laquelle le dépôt des couches d'électrode à combustible (98) des multiples éléments générateurs d'électricité (16a) est simultanément réalisé en amenant la boue destinée à réaliser la couche d'électrode à combustible (98) en contact avec le corps de support poreux (97).

4. Procédé de fabrication de pile à combustible à oxyde solide selon l'une quelconque des revendications 1 à 3, dans lequel la ou les couches d'électrode à air (101) formée(s) dans l'étape de dépôt de couche d'électrode à air (S13) sont formées par agglomération des points de boue de telle manière que des portions de bord de la ou des couches d'électrode à air soient rendues plus fines que la portion intermédiaire de la couche d'électrode à air.

5. Procédé de fabrication de pile à combustible à oxyde solide selon l'une quelconque des revendications 1 à 4, dans lequel la couche d'électrode à air (101) comporte une couche d'électrode à air de fond et une couche d'électrode à air de sommet formée sur la couche d'électrode à air de fond ; la couche d'électrode à air de fond est formée d'un matériau ayant une performance d'échange d'oxygène plus élevée que celle de la couche d'électrode à air de sommet, et est formée pour être lisse et pour être plus fine que la couche d'électrode à air de sommet, tandis que la couche d'électrode à air de sommet est formée d'un matériau ayant une conductivité électronique plus élevée que celle de la couche d'électrode à air de fond.

6. Procédé de fabrication de pile à combustible à oxyde solide selon l'une quelconque des revendications 1 à 5, dans lequel la couche d'électrode à air (101) est constituée de LSCF.

7. Procédé de fabrication de pile à combustible à oxyde solide selon l'une quelconque des revendications 1 à 6, dans lequel chacun des points à boue agglomérés dans l'étape de dépôt de couche la plus externe (S13) est de forme elliptique.

8. Procédé de fabrication de pile à combustible à oxyde solide selon la revendication 7, dans lequel la longueur du grand axe du point elliptique est de 100 µm à 500 µm.

9. Pile à combustible à oxyde solide (16) fabriquée par le procédé de fabrication de pile à combustible à oxyde solide précisé dans l'une quelconque des revendications 1 à 8.
